# EUROPÄISCHE PATENTSCHRIFT

(11) **EP 2 213 957 B1**
(45) Veröffentlichungstag und Bekanntmachung des Hinweises auf die Patenterteilung: **20.09.2017**
(21) Anmeldenummer: 10000719.4
(22) Anmeldetag: 25.01.2010
(51) Int. Cl.: F24H 1/16, F24H 9/14, A47J 31/54, F24H 1/10

(54) **Heizsystem mit Heizeinheit und integrierter Pumpe**
Heat system with heating unit and integrated pump
Système de chauffage doté d'une unité de chauffage et d'une pompe intégrée

(30) Priorität: 29.01.2009 DE 102009006577
(43) Veröffentlichungstag der Anmeldung: 04.08.2010
(73) Patentinhaber: Bleckmann GmbH & Co. KG, 5112 Lamprechtshausen (AT)
(72) Erfinder: Geser, Bernd, 88142 Wasserburg (DE); Schrempf, Alexander, 4802 Ebensee (AT); Reichl, Martin, 5120 St. Pantaleon (AT)
(74) Vertreter: Eisenführ Speiser

(56) Entgegenhaltungen:
- EP-A1- 0 288 216
- EP-A1- 0 303 131
- EP-A1- 1 046 367
- WO-A1-2005/072585
- FR-A1- 2 299 839

## Beschreibung

Die vorliegende Erfindung betrifft ein Heizsystem für ein Fluid mit mindestens einer Heizeinheit und wenigstens einer antreibbaren Pumpe sowie ein Haushaltsgerät zur Zubereitung von Heißgetränken bzw. Brühnahrungsmitteln.

### Hintergrund

Elektrische Geräte zur bzw. mit integrierter Heißwasser- bzw. Dampfableitung finden sich heute in zahlreichen Haushaltsgeräten mit Heißwasser- bzw. Dampferzeugung, beispielsweise Geräte zur Heißgetränkezubereitung, Dampfgarer, aber auch Dampfbügelstationen und seit Neuestem auch in Wäschewaschmaschinen.

Anhand der bekannten Kaffee- bzw. Espressomaschinen, die gemäß unterschiedlichen Prinzipien arbeiten, seien die hier interessierenden Aspekte kurz erläutert. Am wohl bekanntesten sind drucklos arbeitende Kaffeemaschinen, bei denen Wasser aus einem Vorratsbehälter durch eine Heizvorrichtung, üblicherweise ein elektrisch beheiztes Rohr, zu einem Filterhalter mit Kaffeefilter und darin befindlichem Kaffeepulver geführt wird. Infolge von Dampfentwicklung im beheizten Rohr wird erhitztes Wasser über eine Steigleitung zu und aus einem Auslauf gedrückt, um Kaffeepulver in dem im Filterhalter angeordneten Kaffeefilter mit dem Heißwasser zu überbrühen. Aus dem Kaffeefilter fließt der so gebrühte Kaffee unter Einfluss des atmosphärischen Umgebungsdrucks, d. h. etwa 1 bar, in ein entsprechendes Auffanggefäß.

Bei Espressomaschinen wird heißes Wasser mit einer Temperatur um die 90 °C unter einem erhöhten Druck von etwa 15 bar durch in einer Kaffeepulveraufnahme befindliches Kaffeepulver gedrückt. Hierzu wird kaltes Wasser aus einem Wasserbehälter einer elektromotorisch angetriebenen Pumpe zugeführt, mittels der das Wasser dann unter dem benötigten Druck durch eine elektrische Heizvorrichtung, üblicherweise einem sogenannten Thermoblock, der Kaffeepulveraufnahme, wie zum Beispiel einem einfachen Siebträger oder einer komplexeren Brühgruppe, zugeführt. Zum Aufbau und Erhalt des gewünschten hohen Drucks im Bereich des Kaffeepulvers befindet sich die Kaffeepulveraufnahme in einer als Druckraum ausgelegten Brühkammer, die während des eigentlichen Brühvorgangs gegenüber dem atmosphärischen Druck abgedichtet ist. Zur Aufrechterhaltung des idealen Brühdrucks sind bei diesen Maschinen auch der Mahlgrad und die Verdichtung des Kaffeepulvers entscheidend. Aus einem entsprechenden Auslass der Brühkammer wird der gebrühte Espresso in ein Gefäß abgegeben.

Des Weiteren sind Espresso-Systeme bekannt, bei denen das zu brühende Kaffeepulver in vorkonfektionierten, hermetisch dichten Aluminiumkapseln dem Endabnehmer zur Verfügung gestellt wird. Diese Kapseln werden für einen Brühvorgang in die Brühkammer einer kompatiblen Espressomaschine eingelegt und meist während des Verschlussvorgangs der Brühkammer mechanisch an einer Heißwasserzufuhrseite sowie einer Kaffeeabfuhrseite der Kapsel perforiert, um den Brühvorgang - mit heißem Wasser mit einer Temperatur um die 90 °C unter einem erhöhten Druck von etwa 15 bar - zu ermöglichen. Daher kann bei diesen Systemen der Hersteller der Kaffeekapseln, der üblicherweise auch die Spezifikationen der kompatiblen Maschinen bestimmt über den Mahlgrad sowie die Dossierung des in der Kapsel enthaltenen Kaffeepulvers eine gleichbleibende Brühqualität für mit dem System erzeugte Espressos, Lungos oder dergleichen sicherstellen.

Eine weitere immer populärere Kaffeemaschinenart ist zwischen der herkömmlichen drucklosen Kaffeemaschine und Espressomaschine angesiedelt. Dabei wird das Wasser zur Zubereitung des Kaffees zuerst aus dem Wasservorratsbehälter in einen beheizbaren Zwischenbehälter geführt und anschließend als erhitztes Wasser mittels einer elektromotorisch angetriebenen Pumpe unter leicht erhöhtem Druck von 1,5 bis 3 bar einer Kaffeepulveraufnahme zugeführt. Dabei befindet sich, anders als bei der oben erwähnten Espressomaschine, kein loses Kaffeepulver in der Brühkammer, sondern der Kaffee ist in Form eines sogenannten Kaffeepads vorportioniert. Dabei handelt es sich im Wesentlichen um eine bestimmte Portion Kaffeepulver, die üblicherweise mit Filterpapier umgeben ist und in Anlehnung an die weiche Beschaffenheit auch als Softpad bezeichnet wird. Derart vorportioniert kann das Kaffeepad einfach und bequem in die entsprechende Aufnahme der Brühkammer eingesetzt werden. Die Brühkammer wird üblicherweise mit einer mechanischen Abdeckung verschlossen und verriegelt, sodass ein abgedichteter Druckraum entsteht, in den über eine Zuführung in der Abdeckung das auf die bestimmte Temperatur erhitzte Wasser unter Druck gefördert wird und aus einem entsprechenden Auslass der Brühkammer der gebrühte Kaffee wieder in ein Trinkgefäß abgegeben werden kann.

Zur Bereitung des heißen Wassers bzw. Heißwassers befindet sich in den bekannten mit Druck arbeitenden Kaffeemaschinen üblicherweise als Heizeinrichtung der oben erwähnte Thermoblock, bei dem es sich grundsätzlich um einen Wärmetauscher in Form eines Durchlauferhitzers handelt. Der Wärmetauscher weist im Allgemeinen ein elektrisches Heizelement und einen Wasserkreislauf auf, der mit dem Heizelement thermisch verbunden ist, wobei nur dann Wasser hindurchläuft, wenn eine entsprechende Pumpe in Betrieb ist. Der Thermoblock mit seinem elektrischen Heizelement, Befestigungsmitteln und elektrischen Sicherheitselementen bildet eine Unterbaugruppe der Kaffeemaschine. Ein derartiger Thermoblock besteht meist aus gut Wärme leitendem Aluminiumgussblock, mit dem ein elektrisches Heizelement, wie z. B. ein Rohrheizkörper, gut thermisch leitend verbunden ist, wobei innerhalb des Thermoblocks Wasserführungskanäle vorgesehen sind.

Zwar lässt sich sowohl im Hinblick auf Dampfentwicklung als auch auf die Stabilität der Brühtemperatur mit einem solchen Thermoblock eine sehr gut kontrollierte Erwärmung des Wassers erreichen, aber wesentliche Nachteile bestehen in der aufwendigen Herstellung, den Materialkosten sowie der hohen thermischen Masse, d. h. die nicht zu vernachlässigende Wärmekapazität. Da während eines Brühvorgangs die Energie zur Wasserheizung durch die im Thermoblock gespeicherte Wärme sowie die durch das elektrische Heizelement gelieferte Wärme aufgebracht wird, muss der Thermoblock nach einem Einschalten der Maschine erst durch das Heizelement auf Betriebstemperatur gebracht werden, d. h. derartige Maschinen stehen nicht unmittelbar nach dem Einschalten für einen Brühvorgang zur Verfügung. Beispielsweise hat ein Thermoblock mit ca. 460 g Aluminium und einem elektrischen Heizelement mit einer Leistung von 1200 W eine Aufheizzeit von etwa 30-40 s, die ein Anwender der Maschine "gefühlt lange" nach dem Einschalten der Maschine warten muss, bis das erste Heißgetränk bezogen werden kann. Andererseits ermöglicht gerade die große thermische Masse, mittels der darin gespeicherten Wärme, die notwendige Temperaturstabilität bzw. Temperaturkonstanz sicherzustellen. Schließlich ist es auch von Nachteil, dass nach dem Ausschalten einer Maschine mit Thermoblockheizung, die im Thermoblock gespeicherte Restwärme als Verlust an die Umgebung abgeführt wird.

FR 2 299 839 zeigt eine Kaffeemaschine zum Zubereiten eines gefilterten Kaffeeaufgusses mit einem Kaltwasserbehälter sowie einer durch einen Elektromotor angetriebenen Pumpe, deren Einlassöffnung mit dem Boden des Kaltwasserbehälters und deren Austrittsöffnung mit einem einen Filter speisenden Durchlauferhitzer verbunden sind, wobei diese Maschine im Ganzen die Form eines Auslegers mit einer senkrechten, auf einem Sockel montierten Säule aufweist, die einen waagerechten Arm trägt, von dem sich ein Teil über dem Sockel befindet und an seiner Unterseite den Filter trägt. Der Kaltwasserbehälter im waagrechten Arm des Auslegers ist auf einer Höhe über der Höhe der Pumpe angeordnet, während der Durchlauferhitzer im waagrechten Arm oberhalb des Filters angeordnet ist.

EP 0 303 131 A1 zeigt eine Heizeinrichtung, die aus dem eigentlichen Heizelement, einem Befestigungsfuß und einem in den Befestigungsfuß integrierten Durchflussmesser besteht, wobei der Durchflussmesser mit dem Befestigungsfuß einteilig ausgebildet ist. Der Deckel für das Gehäuse des Durchflussmessers wird vom Heizelement gebildet.

EP 0 288 216 A1 zeigt eine Pumpe, die mittels eines elektromagnetisch schwingenden Ankers mit einer zentralen Durchgangsleitung und passiven Ventilen arbeitet.

### Überblick

Eine Aufgabe der Erfindung besteht daher darin, die bekannten Heizvorrichtungen, insbesondere deren Energieeffizienz, zu verbessern. Insbesondere besteht Bedarf hinsichtlich eines Heizsystems, bei dem die Bauteile, die zur Beheizung bzw. Erhitzung eines Fluids, insbesondere von Wasser, in einem Gerät, insbesondere zur Heißgetränkebereitung, wie etwa einer Kaffee- und/oder Espressomaschine benötigt werden, möglichst kompakt vereinen zu können.

Gelöst wird diese Aufgabe durch ein besonders kompaktes Heizsystem gemäß Anspruch 1, einer Schwingankerpumpe für ein solches Heizsystem gemäß Anspruch 13, einem Durchlauferhitzer für ein solches Heizsystem gemäß Anspruch 14 sowie ein Haushaltsgerät gemäß Anspruch 15.

Entsprechend weist ein erfindungsgemäßes Heizsystem wenigstens eine Heizeinheit und wenigstens eine antreibbare Pumpe auf. Die Pumpe weist ein Pumpengehäuse aus mindestens zwei Teilen, einen Pumpenboden und einen Pumpendeckel, auf, wobei das Pumpengehäuse weiter mindestens eine Pumpenwasserzufuhr und eine Pumpenwasserabfuhr aufweist. Die Heizeinheit eines erfindungsgemäßen Heizsystems ist im Prinzip als Durchlauferhit- zer mit mindestens einer Heizwasserzufuhr und einer Heizwasserabfuhr ausgestaltet. Ein Teil des Pumpendeckels fungiert gleichzeitig als ein Verbindungsteil zum Verbinden der Heizeinheit mit der Pumpe, wobei die Pumpenwasserabfuhr und die Heizwasserzufuhr in flüssigkeitskommunizierender Verbindung stehen.

Durch die Ausbildung eines Teiles des Pumpengehäuses als ein Verbindungsteil zum Verbinden der Heizeinheit mit der Pumpe kann auf ein zusätzliches Verbindungselement verzichtet werden. Dies hat den großen Vorteil, dass durch den Verzicht auf ein zusätzliches Teil bzw. Element neben einer kostengünstigeren Fertigung eine deutlich kompaktere Bauweise möglich wird. Auch der Aufwand der Montage eines erfindungsgemäßen Heizsystems reduziert sich durch den Verzicht auf ein zusätzliches, insbesondere separates Verbindungselement aufgrund der verringerten Gesamtzahl der zu montierenden Teile, entsprechend. Ein erfindungsgemäßes Heizsystem ist damit sowohl kostengünstiger als auch flexibler aufgrund der kompakteren Bauweise einsetzbar. Über die Pumpenwasserzufuhr wird der Pumpe ein zu erhitzendes Fluid, insbesondere Wasser zugeführt, das durch die Pumpe aus der Pumpenwasserabfuhr heraus und durch die flüssigkeitskommunizierende Verbindung in die Heizwasserzufuhr der Heizeinheit hineingefördert werden kann. Aus der Heizwasserabfuhr der Heizeinheit kann das erhitzte Fluid, insbesondere Heißwasser zur weiten Verwendung wie beispielsweise der Zubereitung eines Heißgetränkes erhalten werden.

Vorteilhaft ist es auch, dass das erfindungsgemäße Heizsystem ein Pumpengehäuse mindestens zwei Teile, nämlich einem Pumpenboden und einem Pumpendeckel, aufweist. Zwei Teile sind mindestens notwendig, um für die Pumpe notwendige Einbauten im Pumpengehäuse anordnen zu können.

Eine vorteilhafte Weiterbildung eines erfindungsgemäßen Heizsystems besteht in der Herstellung einer direkten, abgedichteten flüssigkeitskommunizierenden Verbindung zwischen der Pumpenwasserabfuhr und der Heizwasserzufuhr. Dieser direkte Kontakt vereinfacht die Montage des Heizsystems. So kann durch das Verbinden der Pumpe mit der Heizeinheit gleichzeitig der direkte, abgedichtete Kontakt zwischen Pumpenwasserabfuhr des Pumpengehäuses bzw. der Pumpe und Heizwasserzufuhr der Heizeinheit hergestellt werden. Durch die geometrische Anordnung der Pumpenwasserabfuhr im die Pumpenwasserabfuhr enthaltenen Gehäuseteil bzw. Pumpenteil und der Heizwasserzufuhr in der Heizeinheit kann sichergestellt werden, dass durch das Verbinden der Pumpe mit der Heizeinheit gleichzeitig und automatisch eine flüssigkeitskommunizierende Verbindung zwischen Pumpenwasserabfuhr und Heizwasserzufuhr entsteht, sobald Pumpengehäuse und Heizeinheit verbunden sind. Die damit noch weiter vereinfachte Montage schließt aus, eine Verbindung zwischen Pumpe und Heizeinheit herzustellen, ohne dass gleichzeitig die gewünschte flüssigkeitskommunizierende Verbindung entsteht. Die Funktionsfähigkeit des Heizsystems nach der Montage ist somit sichergestellt.

Eine erforderliche Abdichtung der flüssigkeitskommunizierenden Verbindung kann beispielsweise mittels entsprechend angeordneten O-Ring-Dichtungen, insbesondere aus thermostabilem Material realisiert werden. Es ist auch möglich an einem der oder beiden der zu verbindenden Teile eine oder mehrere solcher Dichtungen bei der Herstellung dieser Teile bereits, beispielsweise mittels eines 2-Kunstoff-Komponenten-Spritzverfahrens, anzuspritzen.

Eine bevorzugte Ausgestaltungsform einer Heizeinheit eines erfindungsgemäßen Heizsystems, insbesondere des Durchlauferhitzers, ist beispielsweise eine Spiraldurchfluss-Heizeinheit, die in einer Grundform einen rohrförmigen Träger (Mantelrohr) mit wenigstens einer elektrischen Heizleiterstruktur aufweist, die bevorzugt in Dickschichttechnik in bestimmten Bereichen seiner Außenseite ausgeführt sein kann. In bestimmten Ausführungen kann der rohrförmige Träger bzw. das Mantelrohr an seinen beiden Enden einen umlaufenden nach außen weisenden Flansch aufweisen.

Zur Realisierung der Spiraldurchfluss-Heizeinheit befindet sich im rohrförmigen Träger bzw. Mantelrohr ein Kernelement mit wenigstens einem auf der Mantelfläche des Kerns schraubenförmig umlaufenden Steg, wobei zwei benachbarte Stegflanken mit der Mantelfläche eine Strömungsrille bilden, die nach außen durch die Innenseite des rohrförmigen Trägers im Wesentlichen dicht zu einem Strömungskanal abgeschlossen wird. Damit besitzt der Durchlauferhitzer eines erfindungsgemäßen Heizsystems einen benachbart zu einem Mantelrohr ausgebildeten im Wesentlichen spiralförmigen Fluidkanal. Die Linie, welche durch die Flächenschwerpunkte der Strömungsquerschnitte des Fluidkanals gebildet wird, weist dabei bevorzugt einen im Wesentlichen konstanten Abstand zur rohrförmigen Mantelfläche des Mantelrohres auf. Diese Linie ist insbesondere schraubenlinienförmig ausgebildet. Über die Einstellung der Querschnittsfläche über den Verlauf des Fluidkanals kann die Strömungsgeschwindigkeit des Wassers entsprechend seiner Temperatur vorteilhaft erhöht werden, um Kalkansatz am Heizelement entgegenzuwirken. Hierzu wird der Querschnitt des Fluidkanals in seinem Verlauf zur Heizwasserabfuhr hin abschnittsweise, bevorzugt kontinuierlich, kleiner eingestellt und damit die Strömungsgeschwindigkeit des Wassers entsprechend höher.

Das Kernelement ist bevorzugt einstückig, kann aber auch zusätzlich mit einem ersten und ein zweites Endstück mit je einem mit dem Strömungskanal kommunizierenden Anschluss vorgesehen sein. Die Endstücke können jeweils an ihrem Ende des rohrförmigen Trägers mit dem Kernelement fest verbunden sein. Eine aus den Endstücken und dem Kernelement bestehende Einheit kann mit zwei Teilen dargestellt werden, die mittels wenigstens einer geeigneten Verbindungstechnik, beispielsweise einer Bajonett-, Schraub-, Steck-, und/oder Schnappverbindung, miteinander in Eingriff stehen und mechanisch derart verspannt sind, sodass zwischen dem rohrförmigen Träger und den jeweiligen Endstücken angeordnete Dichtungen mit einem vorbestimmten Pressdruck belastet werden.

Wie bereits angesprochen, kann an der Außenseite des Mantelrohrs zur Beheizung des Fluidkanals wenigstens ein elektrisches Heizelement, beispielsweise wenigstens ein elektrisches Dickschichtheizelement, vorgesehen sein. Eine derartige Anordnung eines Fluidkanals in der Heizeinheit hat den Vorteil, dass bei kompakter Bauweise gleichzeitig eine große Fluidkanallänge und damit eine große Wärmeübertragungsfläche zur Verfügung stehen. Insbesondere kann durch die geringen Gesamtabmessungen die thermische Masse des Systems gegenüber dem eingangs erwähnten Thermoblock entscheidend reduziert und gleichzeitig eine hohe Wärmeübertragungskapazität erreicht werden. Beispielsweise konnte die thermische Massen des Systems (inkl. Wasser) auf ca. 112 J/K reduziert und Heizleistungen von bis zu 2600 W darstellt werden, wobei die Aufheizzeit auf weniger als 5 s bei einem Energiebedarf von unter 3,6 Wh gegenüber 10,2 Wh bei der bekannten eingangs genannten Thermoblockheizungen reduziert werden konnte.

In bestimmten Ausführungen des erfindungsgemäßen Heizsystems sind im Pumpengehäuse oder einem Teil der Heizeinheit, insbesondere im Kernelement, zusätzlich eine Brühwasserleitung und eine Brühwasserabfuhr vorgesehen. Die Brühwasserleitung steht in flüssigkeitskommunizierender Verbindung mit der Heizwasserabfuhr an einem Ende der Heizeinheit und kann bevorzugt so geführt sein, dass die Pumpenwasserzufuhr und die Brühwasserabfuhr räumlich zusammengefasst, bevorzugt nahe oder nebeneinander am Heizsystem angeordnet sind. Dadurch kann die Kompaktheit des gesamten Heizsystems noch weiter erhöht werden, insbesondere sind durch die Verlagerung der Brühwasserleitung und der Brühwasserabfuhr ebenfalls ins Pumpengehäuse oder das Kernelement der Heizeinheit keine zusätzlichen Anschlüsse an der Heizeinheit mehr notwendig. Vielmehr laufen sämtliche Flüssigkeitsleitungen innerhalb des Heizsystems, und beim Einbau des erfindungsgemäßen Heizsystems in einem Haushaltsgerät muss nur noch jeweils ein Anschluss an der Pumpenwasserzufuhr sowie an der Brühwasserabfuhr erfolgen. Die Erzeugung der flüssigkeitskommunizierenden Verbindung zwischen Brühwasserleitung und Heizwasserabfuhr wird dabei vorteilhafterweise ebenfalls automatisch durch das Zusammenstecken des Verbindungsteils und der Heizeinheit vollzogen und beispielsweise über eine entsprechende Dichtung, nach Art der oben genannten Dichtungen, abgedichtet.

Zur Erzielung der Pumpleistung der Pumpe eines erfindungsgemäßen Heizsystems ist es vorteilhaft, wenn im Pumpengehäuse wenigstens ein Verdrängungselement beweglich gelagert angeordnet ist und ein Anschluss für einen Antrieb für das Verdrängungselement vorgesehen ist. Das Verdrängungselement dient zum Verdrängen des gepumpten Fluids, insbesondere von Wasser. Die Art der Ausbildung des Verdrängungselementes ist dabei grundsätzlich für die Funktionsfähigkeit der vorliegenden Erfindung unerheblich. So kann beispielsweise eine Rotationspumpe genauso wie eine Kolbenhubpumpe oder Membranpumpe verwendet werden. Es sind sowohl kontinuierlich fördernde Pumpen, als auch stoßweise fördernde Pumpen möglich.

Eine mögliche Ausgestaltung eines Verdrängungselementes bei einem erfindungsgemäßen Heizsystem ist ein Laufrad, insbesondere ein peripherales Laufrad bzw. ein Peripheralrad. Vorteilhafterweise kann die Rotationsachse des Laufrades parallel zur Mittelachse der Heizeinheit angeordnet werden oder identisch mit dieser sein. Die Verwendung von peripheralen Laufrädern hat den Vorteil, dass das Fördermedium durch mehrfaches Überströmen zwischen Laufrad und Gehäusekanal eine starke Energiezufuhr erfährt. Aufgrund der effizienten Energieerhöhung kann die Pumpe verhältnismäßig klein gebaut werden, was ebenfalls der Kompaktheit des Heizsystems zuträgt. Darüber hinaus übertrifft die Druckzahl einer peripheralen Pumpe diejenigen von üblichen Seitenkanalpumpen und die Kennlinie ist steiler. Ein weiterer Vorteil bei der Verwendung eines peripheralen Laufrades besteht in der Tatsache, dass auch verhältnismäßig große Mengen an Gas mitgefördert werden können. Insbesondere bei Problemen in der Zufuhr von Fluid, insbesondere Wasser, wirken sich Gasblasen somit nicht negativ auf die Förderleistung aus. Auch bei einer verstärkten Wärmeentwicklung durch die Heizeinheit, beispielsweise durch Wärmeleitung im Gehäuse oder Wärmestrahlung bei Dauerbenutzung, und daraus resultierender Dampfblasenbildung würde die Förderung einer solchen Peripheralpumpe nicht abreißen lassen und die Laufruhe des peripheralen Laufrades würde kaum gestört werden.

In einem bevorzugten Ausführungsbeispiel der Erfindung ist als Pumpe eine Schwingankerpumpe vorgesehen. Durch die Verwendung eines beweglich gelagerten Verdrängungselementes beispielsweise in Form eines Kolbens im Pumpengehäuse in beispielsweise der Form eines Zylinders kann der Fluidfluss, insbesondere der Wasserfluss, in der nachgeordneten Heizeinheit erzeugt und aufrechterhalten werden. Das Verdrängungselement ist dabei derart im Pumpengehäuse gelagert, dass durch die Pumpenwasserzufuhr Fluid, insbesondere Wasser, in das Pumpengehäuse, beispielsweise durch Schwerkraftförderung, gelangen und von dem Verdrängungselement in Richtung der Pumpenwasserabfuhr gefördert werden kann.

Insbesondere für ein kostengünstiges System kann ein erfindungsgemäßes Heizsystem eine Vibrationspumpe als Pumpe, beispielsweise einer Schwingankerpumpe aufweisen. Eine solche Vibrationspumpe bietet auch dann, wenn hohe Pumpdrücke gefordert sind, eine gute Leistung über eine lange Zeit. Dabei kann die Kompaktheit eines erfindungsgemäßen Heizsystems gemäß einer Ausführung der Pumpe als Schwingankerpumpe weiter gesteigert werden. Ferner kann im Falle einer Schwingankerpumpe zusätzlich ein Membranregler in das erfindungsgemäße Heizsystem im Sinne einer hochintegrierten Kompaktheit integriert sein, welcher die von der Pumpe im Wasserkreislauf erzeugten Pulsationen dämpft und auch das Pumpengeräusch verringert.

Gemäß einem Ausführungsbeispiel eines erfindungsgemäßen Heizsystems kann eine Schwingankerpumpe derart in die Heizeinheit integriert sein, dass eine einfache Verbindung zwischen einem Gehäuseteil der Schwingankerpumpe und einem Gehäuseteil der Heizeinheit realisierbar ist, wodurch eine vereinfachte Montage möglich wird, wie im Folgenden noch näher beschrieben wird. Dabei baut durch eine erfindungsgemäße Anordnung und/oder Montage einer Schwingankerpumpe in bzw. an einer Heizeinheit das gesamte Heizsystem nur unwesentlich größer als die Heizeinheit selbst, denn die Schwingankerpumpe kann erfindungsgemäß im Wesentlichen innerhalb ihres Antriebs sowie teilweise innerhalb der Heizeinheit untergebracht werden.

Wie bereits erwähnt, können die Teile des Pumpengehäuses miteinander und/oder der Verbindungsteil mit der Heizeinheit formschlüssig verriegelbar sein. Um die Montage eines erfindungsgemäßen Heizsystems weiter zu verbessern und kostengünstiger zu gestalten, können insbesondere die Teile des Pumpengehäuses miteinander formschlüssig verriegelbar ausgeführt werden, insbesondere bei einer Schwingankerpumpe. Ein derartiger Formschluss zwischen den Teilen des Pumpengehäuses kann beispielsweise durch eine Verriegelung in Form eines Bajonett- oder Schraubverschlusses oder einer Schnapprastverbindung hergestellt werden. Neben der einfachen und schnellen Verbindbarkeit durch eine derartige Verriegelung ist dann kein weiteres zusätzliches Sicherungsmittel wie Schrauben oder Ähnliches notwendig. Vielmehr fixieren sich die Teile des Pumpengehäuses gegenseitig zueinander.

Ein Teil des Pumpengehäuses der Schwingankerpumpe bildet erfindungsgemäß gleichzeitig das Verbindungsteil zum Verbinden der Heizeinheit mit der Pumpe, so dass die Pumpenwasserabfuhr und die Heizwasserzufuhr durch eine einfache Montage in fluidkommunizierende Verbindung gebracht werden können. Insbesondere kann der mindestens eine Verbindungsteil zusammen mit mindestens einem Verbindungsteil der Heizeinheit eine Verbindung ausbilden. Dadurch kann auf einfache Weise eine fluidkommunizierende Verbindung zwischen einer Kompressionskammer bzw. einem Bereich erhöhten Drucks, insbesondere Pumpdrucks, und einer Heizwasserleitung gebildet werden.

Besonders vorteilhaft bei einer Schwingankerpumpe, nicht nur in Bezug auf die Montage, ist, dass die üblicherweise notwendige Befestigung des Pumpengehäuses am von einer Magnetspule gebildeten Pumpenantrieb, wie beispielsweise in der DE 10 2005 048 765 A1 erkennbar, entfallen kann, da beim erfindungsgemäßen Heizsystem das Pumpengehäuse zwischen der Heizeinheit und dem Pumpenantrieb (Magnetspule) so angeordnet werden kann, dass das Pumpengehäuse automatisch in seiner Einbaulage festgelegt bzw. fixiert wird. Damit sind keine eigenen bzw. zusätzlichen Befestigungsmaßnahmen für das Pumpengehäuses mehr erforderlich. Die Magnetspule als Antrieb der Schwingankerpumpe wirkt mit dem in ihr erzeugten Magnetfeld auf das im Pumpengehäuse angeordnete Verdrängungselement in Form eines Kolbens, insbesondere auf einen Magnetteil des Kolbens bzw. im Kolben, den sogenannten Schwinganker, der zwischen zwei Federn gelagert ist.

Eine Festlegung der Pumpe an der Heizeinheit kann somit besonders einfach zwischen dem Joch und/oder einer Ummantelung des Jochs der Magnetspule des Pumpenantriebs und der Heizeinheit in Form einer lösbaren bzw. nicht lösbaren Verriegelung erfolgen. Durch erfindungsgemäß zusammenwirkende Verbindungsteile, beispielsweise in Form von Rastnasen, kann - wie oben bereits angesprochen - die üblicherweise zwischen Joch und dem Pumpengehäuse erforderliche und beispielsweise in der Offenlegungsschrift DE 10 2005 048 765 A1 dargestellte Schraubenverbindung entfallen. Darüber hinaus kann in diesem Zusammenhang auch ein an einem Gehäuseteil des Pumpengehäuses für die Schraubenverbindung vorgesehener Anschlag bzw. Flansch entfallen. Wie bereits ausgeführt, vereinfacht sich der Aufbau der Schwingankerpumpe im Heizsystem, da eine eigenständige Fixierung des Pumpengehäuses der Schwingankerpumpe am Pumpenantrieb, wie zum Beispiel am Joch der Magnetspule, beispielsweise mittels Schrauben, nicht mehr notwendig ist.

Hinsichtlich der Ausgestaltung der Verriegelung, insbesondere der formschlüssigen Verriegelung, zwischen einem Teil des Pumpenantriebs und/oder des Pumpengehäuses und der Heizeinheit, sei angemerkt, dass diese sowohl reversibel, als auch irreversibel ausgestaltet sein kann. Bei einer irreversiblen Ausgestaltung kann sichergestellt werden, dass eine Lösung der formschlüssigen Verriegelung nur bei Zerstörung zumindest eines der Teile des Heizsystems erfolgen kann. So kann ein nicht autorisiertes Zerlegen, insbesondere eine Wartung durch nicht autorisierte Personen, eines erfindungsgemäßen Heizsystems, sichergestellt werden, dass dieses nicht wieder zusammengebaut und in Betrieb genommen werden kann. Bei unsachgemäßer Wartung würde die Gefahr bestehen, dass die mit Druck beaufschlagte Verbindungen und/oder schwingende Teile nicht mehr druckfest bzw. statisch bestimm gelagert sind, und damit die Gefahr einer Beschädigung bis hin zum Austreten von heißem Wasser bzw. Wasserdampf oder eines Arbeitens der Schwingankerpumpe in deren Lagerung und damit einhergehender Verletzungen besteht.

Gemäß einem Ausführungsbeispiel eines erfindungegemäßen Heizsystems kann somit zwischen dem Gehäuse einer als Antrieb einer Schwingankerpumpe vorgesehenen elektrischen (Magnet-)Spule, d.h. dem Pumpengehäuse der Schwingankerpumpe, und dem Gehäuse der Heizeinheit eine Verriegelung hergestellt werden, über welche zugleich die Lage und die Integration der Pumpe im hydraulischen Strang der Pumpe gewährleistet wird. Die Verriegelung kann z.B. als Bajonettverbindung oder als Steck- oder Schnappverbindung ausgeführt sein.

Eine Dichtung kann dabei durch eine radiale Dichtung erfolgen, so dass eine axiale Kraft auf Dichtelemente nicht notwendigerweise aufgebracht werden muss. Erfindungsgemäß kann insbesondere bei einer erfindungsgemäßen Montage einer Schwingankerpumpe die Abdichtung zwischen Pumpe und Gehäuse und/oder zwischen Pumpe und Heizeinheit einfacher ausgestaltet werden, insbesondere dadurch, dass eine Wellendichtung wie bei einer Pumpe mit über eine Welle angetriebenem Verdrängungselement nicht erforderlich ist. Beim Heizsystem mit Schwingankerpumpe kann eine Abdichtung des unter Druck stehenden Abschnitts des hydraulischen Strangs im Wesentlichen über eine einfache Pumpendichtung zwischen den beiden Gehäuseteilen der Schwingankerpumpe, d. h. dem Schwingankerpumpendeckel und einem Schwingankerpumpenboden, sowie über jeweils eine einfache Anschlussdichtung zwischen dem Schwingankerpumpenboden und der Heizeinheit erfolgen.

Weitere Dichtungen können bei bestimmten Ausführungsformen vorgesehen sein, sind jedoch nicht notwendigerweise erforderlich, denn durch die beiden genannten einfachen Dichtungen, insbesondere die Pumpendichtung sowie die Anschlussdichtung, wird eine Abdichtung zwischen den unter Druck stehenden fluidführenden Teilen der Schwingankerpumpe sowie dem nicht-fluidführenden Bereich der Heizeinheit im Wesentlichen gewährleistet. Durch eine erfindungsgemäße Integration einer Schwingankerpumpe in eine Heizeinheit kann damit je nach Ausführungsart ein Großteil der üblicherweise erforderlichen Dichtungen und Verbindungsschläuche bzw. Fluidführungs-Komponenten entfallen.

Wie oben angemerkt, können die Brühwasserabfuhr und die Pumpenwasserzufuhr, welche die prinzipiell einzigen benötigten externen Anschlüsse eines erfindungsgemäßen Heizsystems darstellen, in bestimmten Ausführungen im selben Teil des Heizsystems, d. h. im Pumpengehäuse, im Verbindungsteil, oder in der Heizeinheit, insbesondere im Kernelement, angeordnet sein. Damit kann die Komplexität der Einzelteile im Idealfall auf ein Teil beschränkt werden, z. B. der Verbindungsteil des Pumpengehäuses. Die restlichen Gehäuseteile können deutlich einfacher gestaltet sein. Dies hat eine weitere Kostenreduzierung bei der Herstellung der Pumpengehäuseteile zur Folge.

In vorteilhaften Weiterbildungen des erfindungsgemäßen Heizsystems kann in der Brühwasserabfuhr ein Rückschlagventil oder Sperrventil integriert sein. Damit kann sichergestellt werden, dass bei Fehlfunktionen des Antriebs der Pumpe oder bei Fehlfunktionen der Pumpe selbst Wasser aus der Pumpenwasserzufuhr entgegen der eigentlichen Strömungsrichtung zurückgepresst wird. Dies ist vorteilhaft, da so diese Seite der Pumpe nicht druckfest ausgeführt werden muss. Die Förderrichtung der Pumpe ist in Richtung der Pumpenwasserabfuhr gerichtet.

Die Pumpenwasserzufuhr erfolgt entweder durch selbstständiges Ansaugen durch die Pumpe oder durch einfache Schwerkraftförderung aus beispielsweise einem separat, gegenüber der Pumpe bevorzugt erhöht angeordneten Wassertank zur Pumpenwasserzufuhr. Auch ein Festwasseranschluss, insbesondere bei Geräten für den gewerblichen Bereich ist möglich, so dass Wasser mit einem für öffentliche Wasserversorgungsnetze üblichen Druck zugeführt werden kann.

Bei bekannten Heizsystemen ist üblicherweise im hydraulischen Strang als weiteres Funktionsbauteil ein Durchflussmesser vorgesehen, um der externen Steuerungselektronik Informationen über die geförderte Fluidmenge (Bezugmenge) zur Verfügung zu stellen und diese darauf gestützt durch eine entsprechende Steuerung bzw. Regelung der Pumpe zu stellen. Dies ist insbesondere für die Zubereitung hochwertiger Heißgetränke, wie Espresso oder Ristretto ein für die Qualität des Getränks entscheidendes Kriterium.

Bei bestimmten Ausführungen des erfindungsgemäßen Heizsystems kann die Pumpe gleichzeitig als Durchflussmesser geeignet sein, wenn nämlich die Durchflussrate durch die Heizeinheit durch die der Pumpe zugeführte Antriebsleistung abgebildet werden kann. Insbesondere bei einem funktionalen, beispielsweise linearen, Zusammenhang zwischen Antriebsleistung und Fördermenge bzw. Taktung bzw. Drehzahl der Pumpe kann dann auf den zusätzlichen, Kosten verursachenden und Platz benötigenden Durchflussmesser verzichtet werden. Auf diese Weise wird einerseits ein kostengünstigeres Heizsystem zur Verfügung gestellt, andererseits der Platz für den zusätzlichen Durchflussmesser gespart. Die Kompaktheit des Heizsystems wird zudem weiter verbessert.

Als Alternative hierzu kann bei Bedarf die Funktionalität des Durchflussmessers auch in dem oben angesprochenen Fluidmodul integriert werden. Wie oben angemerkt, kann ein erfindungsgemäßes Heizsystem in vorteilhafterweise im Fluidmodul den Durchflussmesser aufweisen. Hierbei wird ermöglicht, dass in einem einzigen Element, nämlich dem Fluidmodul, eine Bündelung von Funktionalitäten erzielt werden kann. In diesem Fall weist das Fluidmodul sowohl die flüssigkeitskommunizierende Verbindung zwischen Pumpenwasserabfuhr und Heizwasserzufuhr als auch die Durchflussmessung mittels Durchflussmesser auf. Durch eine derartige Bündelung von Funktionalitäten lässt sich das gesamte Heizsystem noch kompakter, d. h. platzsparender darstellen.

Als weitere besondere Ausführung kann die Nutzung der Pumpe als Durchflussmesser zusätzlich zu einem in einem Fluidmodul implementierten Flowmeter vorgesehen sein, um so die Funktion der Pumpe und/oder des Flowmeters im Wege einer Plausibilitätsprüfung zu überwachen und ggf. durch ein entsprechend ausgelegtes Steuerungsprogramm in einer Steuerungselektronik gegenprüfen zu können.

In vorteilhaften Weiterbildungen des erfindungsgemäßen Heizsystems kann zusätzlich zu den vorstehenden Ausführungen in die Brühwasserleitung ein sogenanntes Drainagenventil integriert sein, das besonders bei Maschinen mit einer Brühgruppe mit Kolbensystem von Vorteil ist. In Normalstellung des Drainagenventils ist die Brühwasserleitung über die Brühwasserabfuhr mit dem Einlauf der Brühgruppe verbunden. Das Drainagenventil kann dann z. B. mittels eines ebenfalls in das Heizsystem integrierten Magnetschalters gesteuert werden, wobei der Magnetschalter zur Steuerung des Ventils in Normalstellung nicht geschaltet ist. Sobald der Magnetschalter angesteuert wird, d. h. anzieht, wird die Durchlassrichtung im Drainagenventil von der Brühwasserabfuhr zu einem anderen weiteren Auslauf umgestellt, der beispielsweise zu einer Tropfschale der Maschine führt. Das Drainageventil dient dann dazu, der Brühgruppe beim Öffnen der Brühgruppe nach einem Brühvorgang Luft zuzuführen, um das Öffnen gegen den in der Brühgruppe nach dem Brühvorgang entstandenen Unterdruck zu ermöglichen. Als zusätzliche Funktion kann vorgesehen sein, dass die Steuerungselektronik der Maschine das Drainageventil derart steuert, um Wasser von der Heizeinheit in die Tropfschale gelangen zu lassen, damit beispielsweise Spülwasser bei einem Reinigungszyklus oder Entkalkungszyklus nicht in die - je nach Maschinentyp - Brühgruppe oder Brühkammer gelangt zu lassen.

Besonders vorteilhaft ist auch die Integration eines Zweiwegeventils in die Brühwasserleitung, mittels dem sich die Wasserführung in Richtung Brühgruppen- bzw. Brühkammerzulauf oder zu einer Dampf- bzw. Heißwasserabgabestelle beispielsweise an einem Dampfrohr der Maschine umstellen lässt. Ein solches Ventil kann ähnlich dem oben beschriebenen Drainagenventil mittels eines Magnetschalters gesteuert werden. Bevorzugt ist ein derartiges Zweiwegeventil von der Heizeinheit aus betrachtet vor einem vorhandenen Drainagenventil vorgesehen.

In besonderen Ausführungen kann im hydraulischen Strang, bevorzugt im erfindungsgemäßen hochintegrierten Heizsystem ein Überdruckventil vorgesehen bzw. integriert sei, welches das System vor anomalen Betriebsdrücken schützt.

In einer besonderen Weiterbildung ist in das Heizsystem ein Rückführungsventil integriert, mittels dem sich Heißwasser aus der Brühwasserleitung in den Niederdruckbereich vor der Pumpe, bevorzugt in einen Frischwasserbehälter, zurückführen lässt, bis sich ein gewünschter Systemdruck der für den anstehenden Brühvorgang im Heizkreis aufgebaut hat. Das Rückführungsventil kann in einer Ausführung als ein elektromechanisches von der Steuerelektronik geschaltetes oder alternativ als ein selbsttätig über Federkräfte schaltendes Ventil ausgeführt sein. Bevorzugt ist eine hierfür benötigte Rückführungsleitung auch im erfindungsgemäßen Heizsystem integriert, um so den Gedanken der hochintegrierten Kompaktheit möglichst viele Systemkomponenten umzusetzen.

Entsprechend ist ein erfindungsgemäßes Heizsystem, welches sich insbesondere für alle eingangs beschriebenen Kaffeemaschinen zum Einsatz eignet, für Betriebsdrücke bis zu 15 bis 18 bar ausgelegt. Für die Herstellung von Kaffee mittels der eingangs beschriebenen Softpads sind Drücke von bis zu 2 bar bei Durchflussraten von bis zu 6 ml/s einstellbar. Für die Herstellung von hochqualitativem Espresso sind bei Drücken von 12 bis 15 bar Durchflussraten von 2 bis 3 ml/s einstellbar. Durch die druckfeste Auslegung kann ein erfindungsgemäßes Heizsystem flexibel bei allen relevanten Kaffeeherstellungen von einfachem, mittels Softpads erzeugten, Filterkaffee bis hin zu hochqualitativem Espresso zum Einsatz kommen. Des Weiteren ist natürlich auch der Bezug von drucklos erzeugten Getränken wie klassischem Filterkaffee oder die Abgabe von Heißwasser für z. B. die Zubereitung von Tees oder Instantsuppen möglich, wobei Durchflussraten von bis zu 8 ml/s eingestellt werden können. Der Vollständigkeit halber sei erwähnt, dass bei der Abgabe von Dampf, zum Beispiel zum Aufschäumen von Milch, Durchflussraten von 0,3 bis 1 ml/s einstellbar sind. Dies ermöglicht eine hohe Stückzahlenfertigung, welche die Kosten eines einzelnen Heizsystems noch weiter reduziert.

Vorteilhafterweise ist am Heizsystem, insbesondere am Pumpengehäuse, eine standardisierte Montageschnittstelle zum Befestigen des Heizsystems in oder an einer dafür vorgesehenen Maschine vorgesehen. Durch die Verwendung einer standardisierten Montageschnittstelle kann sichergestellt werden, dass die Flexibilität eines erfindungsgemäßen Heizsystems noch weiter gesteigert wird. Eine zusätzliche Adapterplatte oder weitere zusätzliche Montagehilfsmittel sind nicht mehr notwendig.

Eine Möglichkeit zur Ausgestaltung einer standardisierten Montageschnittstelle ist das Vorsehen von mindestens einem Bohrloch an der Außenseite des Pumpengehäuses, durch welches mittels einer Schraub- oder Nietverbindung das Heizsystem in einer dafür vorgesehenen Maschine befestigt werden kann. Die Kompaktheit des Heizsystems wird somit durch die notwendige Montage in einer dafür vorgesehenen Maschine nicht beeinträchtigt.

Im Fall einer Peripheralrad oder Rotationspumpe kann der Pumpenantrieb durch einen Elektromotor, bevorzugt einen Asynchronmotor, gebildet werden. Die Nennantriebsleistung orientiert sich dabei am maximal benötigten Druck bzw. der maximalen benötigten Förderleistung. Wie voranstehend bereits erläutert, muss eine Pumpe eines erfindungsgemäßen Heizsystems eine große Bandbreite abdecken können. Einerseits sind hohe Durchflussmengen von bis zu 6 ml/s bei geringen Drücken von ca. 2 bar gefordert, andererseits muss der Antrieb und auch die Pumpe bis zu 18 bar bei Durchflussraten von 2 bis 3 ml/s aufbringen können. Beim Einsatz erfindungsgemäßer Heizsysteme in Spezialmaschinen kann selbstverständlich auch ein auf den Spezialeinsatz angepasster Antrieb zum Einsatz kommen. Insbesondere im Hinblick auf besonders hohe Drücke sind möglicherweise besondere Antriebsformen notwendig, welche beispielsweise mit hohem Drehmoment, bei gleichzeitiger geringer Drehzahl große Drücke bei geringer Förderleistung aufbauen können.

Um die Kompaktheit eines erfindungsgemäßen Heizsystems noch weiter zu erhöhen, kann der Pumpenantrieb bzw. die gesamte Pumpe im Wesentlichen innerhalb der Heizeinheit angeordnet werden. Beispielsweise kann hierfür die Heizeinheit derart rohrförmig, bevorzugt zylinderförmig, ausgeführt werden, dass der Innenraum dieses Rohres dazu genutzt werden kann, einen Antrieb für die Pumpe bzw. die gesamte Pumpe aufzunehmen. Die Abmessung des resultierenden Heizsystems kann so weiter nahezu halbiert werden.

Gemäß einem Ausführungsbeispiel kann eine Pumpe in Form einer Schwingankerpumpe zumindest zu einem bedeutenden Teil in einem von der Heizeinheit gebildeten Innenraum angeordnet werden. Dabei kann der Pumpenteil der Schwingankerpumpe, in welchem die Kompression des geförderten Fluids erfolgt, d.h. in welchem sich das kolbenartige Pumpenelement, beispielsweise der Schwinganker, in einem zylinderartigen Pumpenelement bewegt, innerhalb der Heizeinheit angeordnet sein.

Bei einem Heizsystem, bei dem die Pumpe innerhalb der Heizeinheit angeordnet ist, wird besonders vorteilhaft zusätzlich eine Schallisolierung erreicht. Eine solche Schallisolierung dämmt vorteilhaft die Emission des Pumpgeräusches während des Pumpvorganges, insbesondere beim Einsatz einer Schwingankerpumpe. Das gesamte Heizsystem wird so deutlich leiser und für den Verwender eines erfindungsgemäßen Heizsystems angenehmer. Die Schallisolierung kann weiter durch die Materialwahl des Pumpgehäuses und/oder die Materialwahl der Heizeinheit weiter verbessert werden. Selbstverständlich sind zusätzliche Einsätze oder Dämmmaterialien zur Erzielung einer noch stärkeren Schallisolation möglich.

Ebenfalls kann es vorteilhaft sein, wenn der Kontakt zwischen Pumpgehäuse und Heizeinheit eine hohe Wärmeleitfähigkeit aufweist, d. h., es wird ein guter Wärmeübergang von der Pumpe zur Heizeinheit sichergestellt. Dies hat insbesondere zwei Vorteile. Zu Beginn des Heizvorgangs, also wenn die Pumpe ihren Betrieb aufnimmt, trägt die durch den Antrieb der Pumpe erzeugte Abwärme zum Vorheizen der Heizeinheit bei, indem die produzierte Wärme über die Kontaktflächen zwischen Pumpe und Heizeinheit übertragen wird. Im laufenden Betrieb wiederum, also wenn die Heizeinheit vollständig erwärmt ist, kann durch die guten Wärmeübertragungseigenschaften zwischen Heizeinheit und Pumpe Wärme von der Heizeinheit auf die Pumpe übertragen werden, sodass geförderte Flüssigkeit bereits in der Pumpe vorgewärmt wird. Durch diesen bidirektionalen Wärmeaustausch wird einerseits Energie gespart andererseits kann das gesamte Heizsystem noch kompakter gebaut werden, da weniger Wärmeübertragungsfläche bei der Heizeinheit notwendig ist. Das gesamte Heizsystem wird somit kompakter und effizienter.

Ein weiterer Vorteil der Integration des Pumpenantriebs bzw. der gesamten Pumpe in der Heizeinheit besteht darin, dass von einschlägigen für Haushalts-und Gewerbegeräte geltenden Sicherheitsvorschriften geforderten Eigenschaften für elektrischen Strom führende bzw. für unter elektrischer Spannung, insbesondere unter Netzspannung, stehende Komponenten des Heizsystems einfacher und vor allem kostengünstiger gestaltet werden können. So kann beispielsweise, die aufwendige Kunststoffumspritzung der Wicklung einer Schwingankerpumpe, die zur elektrischen Isolation und auch einem mechanischen Schutz der Wicklung dient, schwächer ausgelegt werden bzw. ganz in Fortfall gelangen, da sie nicht berührbar im Inneren des Kunststoffkerns der Heizeinheit angeordnet ist. Damit wird der Pumpenantrieb in seiner Herstellung bzw. als zugelieferte Komponente günstiger.

Andererseits kann es für den Einsatz eines erfindungsgemäßen Heizsystems bei Gastronomiemaschinen, die nahezu im Dauereinsatz stehen, erwünscht sein, dass der Pumpenantrieb, d. h. ein Motor oder eine Magnetspule, sich im Wesentlichen außerhalb der Heizeinheit befindet, da bei einem Dauereinsatz der Motor bzw. die Magnetspule einer hohen Belastung ausgesetzt ist. Durch diese Dauerbelastung erwärmt sich der Motor durch die eigene Verlustleistung, insbesondere durch die im Antrieb entstehenden Reibungsverluste. Die Anordnung des Motors außerhalb der Heizeinheit ermöglicht dann eine deutlich einfachere Kühlung, beispielsweise durch Kühlrippen, auch wenn auf diese Weise die Kompaktheit des Heizsystems nicht ausgereizt werden kann. Jedoch kann durch diese Anordnung die Standhaftigkeit des Heizsystems weiter verbessert werden.

Für maximale Flexibilität eines erfindungsgemäßen Heizsystems weist dieses vorteilhafterweise zusätzlich eine Universalelektronik als Steuerungselektronik auf, welche die Pumpe, insbesondere die Drehzahl bzw. Taktung der Pumpe und damit den jeweils benötigten Volumenstrom, die vorstehend beschriebenen Ventile über eine Steuerverbindung ansteuern kann sowie Signale anderer elektronischer Bauelemente wie beispielsweise solcher des Flowmeters oder eines NTC-Elements als Temperatursensors auswerten kann. Insbesondere kann mittels einer Anpassung der Software der Steuerelektronik das Heizsystem an die individuellen Anwendungen angepasst werden. Das Vorsehen der Steuereinheit direkt im Heizsystem hat den Vorteil, dass dieses Heizsystem flexibel in jede beliebige Kaffeemaschine oder sonstige Haushaltsgeräte eingebaut werden kann. Der Abnehmer des Heizsystems muss sich um die Funktionsweise des Heizsystems selbst keine Gedanken mehr machen, sondern ausschließlich Anschlüsse an die Schnittstellen der Steuereinheit, sowie an der Pumpenwasserzufuhr und der Brühwasserabfuhr vorsehen. Weitere Schnittstellen sind vom Verwender des erfindungsgemäßen Heizsystems nicht zu beachten.

Ebenfalls Gegenstand der vorliegenden Erfindung ist ein Haushaltsgerät zur Zubereitung von Heißgetränken bzw. gebrühten Nahrungsmitteln aufweisend mindestens ein erfindungsgemäßes Heizsystem. Insbesondere bei Haushaltsgeräten zur Herstellung von Kaffee, sogenannten Vollautomaten, ist ein erfindungsgemäßes Heizsystem sinnvoll, da es den gesamten Bereich von einfachem Filterkaffee bis zu hochqualitativem Espresso abdecken kann.

Weitere vorteilhafte Ausgestaltungen der vorliegenden Erfindung sowie mehrerer Ausführungsbeispiele hierzu werden nachstehend in Verbindung mit den beigefügten Zeichnungsfiguren näher erläutert. Die innerhalb der Beschreibung der Ausführungsbeispiele verwendeten Begriffe "links", "rechts", "oben" und "unten" beziehen sich auf die Zeichnungsfiguren in Ausrichtung mit normal lesbaren Figurenbezeichnungen und Bezugszeichen. Hierbei ist:
- Fig. 1: eine Darstellung eines erfindungsgemäßen Heizsystems mit Antrieb;
- Fig. 2: ein erfindungsgemäßes Heizsystem im Teilschnitt durch die Heizeinheit;
- Fig. 3: ein Querschnitt durch ein erfindungsgemäßes Heizsystem mit Antrieb;
- Fig. 4: eine Schrägansicht eines erfindungsgemäßen Heizsystems mit Antrieb;
- Fig. 5a: ein Querschnitt durch eine weitere Ausführungsform eines erfindungsgemäßen Heizsystems;
- Fig. 5b: eine Draufsicht auf das Heizsystem gemäß Fig. 5a;
- Fig. 6a: eine Explosionsdarstellung eines erfindungsgemäßen Heizsystems gemäß den Fig. 5a und 5b;
- Fig. 6b: eine Teilschnittansicht in isometrischer Darstellung eines erfindungsgemäßen Heizsystems gemäß Fig. 6a;
- Fig. 7a: eine weitere Ausführungsform eines erfindungsgemäßen Heizsystems im Querschnitt;
- Fig. 7b: eine Draufsicht auf ein erfindungsgemäßes Heizsystem gemäß der Fig. 7a;
- Fig. 8: eine Querschnittsdarstellung in isometrischer Ansicht eines erfindungsgemäßen Heizsystems gemäß den Fig. 7a und 7b;
- Fig. 9: eine Explosionsdarstellung einer Ausführungsform eines erfindungsgemäßen Heizsystems mit Schwingankerpumpe.
- Fig. 10: eine Schnittansicht einer Ausführungsform eines erfindungsgemäßen Heizsystems mit Schwingankerpumpe;
- Fig. 10a: eine Detailansicht einer Schwingankerpumpe in der Schnittansicht gemäß Fig. 9;
- Fig. 11: eine Schrägansicht einer Ausführungsform eines erfindungsgemäßen Heizsystems mit Schwingankerpumpe, und
- Fig. 12: eine weitere Schrägansicht, im Wesentlichen entsprechend einer Seitenansicht einer Ausführungsform eines erfindungsgemäßen Heizsystems mit Schwingankerpumpe.

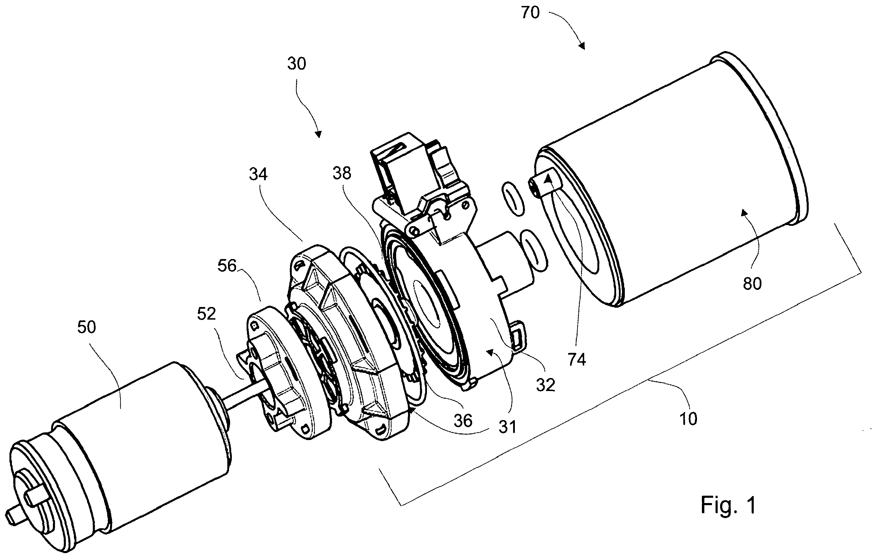

Fig. 1 zeigt eine Darstellung eines ersten Ausführungsbeispieles eines erfindungsgemäßen Heizsystems 10 mit einem Antrieb in Form eines Elektromotors 50. Das Heizsystem 10 ist aus einer Heizeinheit 70 und einer Pumpe 30 zusammengesetzt. Die Pumpe weist ein Pumpengehäuse 31 auf, das aus zwei Teilen, nämlich einem Pumpendeckel 32 und einem Pumpenboden 34 gebildet ist. Im Inneren des Pumpengehäuses 31 ist ein Laufrad 38 in Form eines peripheralen Laufrades angeordnet. Die beiden Teile des Pumpengehäuses 31, nämlich Pumpendeckel 32 und Pumpenboden 34 sind mittels eines Bajonettverschlusses miteinander verbindbar. Zwischen Pumpenboden 34 und Pumpendeckel 32 ist eine Pumpendichtung 36 in Form einer Ringdichtung angeordnet, welche den Innenraum des Pumpengehäuses 31 abdichtet.

Im Pumpendeckel 32 sind zwei Anschlussstutzen zu erkennen, welche die Pumpenwasserzufuhr 44 und die Brühwasserabfuhr 42 bilden. Beide sind nebeneinander angeordnet, sodass zum Anschluss des Heizsystems 10 in einer Maschine der Zugang von einer einzigen Seite ausreichend ist.

Die Heizeinheit 70 ist in Form eines im Wesentlichen rohrförmigen Durchlauferhitzers ausgebildet. Der Durchlauferhitzer weist einen Wärmetauscher 78 auf, der eine außen liegende Heizfläche 80, auf der - beispielsweise mittels eines geeigneten Auftragungsverfahren für elektrische Dickschichtstrukturen - ein elektrisches Dickschichtheizelement aufgetragen ist, und einen innenliegenden Fluidkanal aufweist. Der Fluidkanal verläuft schraubenförmig mit einem sich verringerndem Querschnitt entlang der bzw. benachbart zur Heizfläche 80. In Richtung des Pumpendeckels 32 ist an der Heizeinheit 70 eine Heizwasserzufuhr 74 zu erkennen. Diese Heizwasserzufuhr 74 steht nach dem Zusammenstecken des Pumpendeckels 32 mit der Heizeinheit 70 in Kontakt mit der in dieser Ansicht nicht erkennbaren Pumpenwasserabfuhr 46 der Pumpe 30. Zur Abdichtung der Pumpenwasserabfuhr 46 und der Heizwasserzufuhr 74 ist als Dichtung ein einfacher O-Ring vorgesehen. Dieser O-Ring ist, wie die restlichen Dichtungen des Heizsystems 10 auch, in einer Nut der Pumpenwasserabfuhr 46 fixiert, sodass die Dichtung beim Montieren des Heizsystems nicht verrutschen kann.

Der Pumpendeckel 32 weist Schnapprastelemente auf, welche mit der Heizeinheit 70 zusammenwirken können. Der Pumpendeckel 32 kann als Verbindungsteil in einfacher Weise auf die Heizeinheit 70 aufgerastet werden und wird damit dort fixiert.

Das Laufrad 38 der Pumpe 30 ist durch einen Antrieb antreibbar. Dieser Antrieb ist in dieser Ausführungsform gemäß Fig. 1 als Motor 50 ausgestaltet. Der Motor 50 weist eine Antriebswelle 52 auf, welche abgedichtet in das Pumpengehäuse 31 geführt ist und dort in drehmomentschlüssigem Kontakt mit dem Laufrad 38 steht. Die Abdichtung der Antriebswelle 52 im Gehäuse 31 erfolgt über eine Wellendichtung. Zur Fixierung des Motors 50 am Heizsystem 10 ist ein Verbindungselement 56 vorgesehen, welches zur Verbindung des Motors 50 mit dem Pumpengehäuse 31 dient. Zwischen Verbindungselement 56 und Pumpengehäuse 31 ist ebenfalls wieder ein Bajonettverschluss zum einfachen und schnellen Verbinden vorgesehen. Der Motor 50 ist in das Verbindungselement 56 gesteckt und auf diese Weise dort drehfest fixiert.

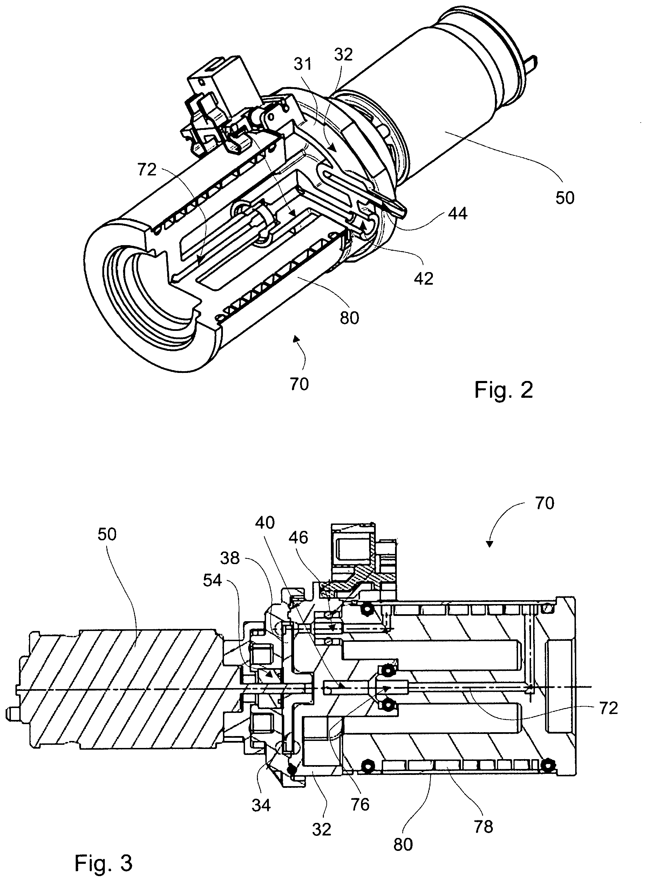

Fig. 2 zeigt eine montierte Ausführungsform eines Heizsystems 10 mit einem Motor 50. Im Querschnitt ist die Heizfläche 80 nicht dargestellt und somit liegen die Fluidkanäle des Wärmetauschers 78 der Heizeinheit 70 frei. Im Inneren der Heizeinheit 70 ist eine Heizwasserleitung 72 angeordnet, welche das im Wärmetauscher 78 erhitzte Wasser innerhalb der Heizeinheit 70 zurückführt und durch die Brühwasserleitung 40 im Pumpendeckel 32 und über die Brühwasserabfuhr 42 abgeben kann. Ebenfalls zu erkennen ist in diesem Halbschnitt die Pumpenwasserzufuhr 44, über die Wasser in den Pumpenraum des Pumpengehäuses 31 zugeführt wird. Auf der Hinterseite des Pumpendeckels 32 ist die Pumpenwasserabfuhr 46 sowie die zugehörige Abdichtung bei der flüssigkeitskommunizierenden Verbindung mit der Heizwasserzufuhr 74 zu erkennen. Die Heizwasserzufuhr 74 transportiert das von der Pumpe 30 geförderte Wasser zum Eingang des Wärmetauschers 78. Das Wasser strömt, ebenfalls weiter durch die Pumpe gefördert, entlang der schraubenförmigen Fluidkanäle des Wärmetauschers 78 bis zum unteren Ende der Heizeinheit 70 und wird dort durch die Heizwasserleitung 72 aus dem Wärmetauscher 78 abgeleitet. Das erhitzte Wasser kann über die Brühwasserleitung 40 und die Brühwasserabfuhr 42 einer entsprechenden Maschine, insbesondere einer Kaffeemaschine zur Verfügung gestellt werden.

Der Innenraum der Heizeinheit 70 ist ansonsten hohl, sodass der Wärmetauscher 78 einen Wärmeübergang nur von der außen angeordneten Heizfläche 80 nach innen aufbringen kann. Der relativ lange Weg des erhitzten Wassers im Heizwasserkanal 72 ermöglicht somit eine Normalisierung erhitzten Wassers, insbesondere ein Auskondensieren von Siedebläschen und/oder einen Temperaturausgleich im Heißwasser. Beispielsweise können bei der Bildung von Dampfblasen im erhitzten Wasser diese bei der Rückleitung in der Heizwasserleitung 72 sowie der Brühwasserleitung 40 wieder kondensieren, sodass an der Brühwasserabfuhr 42 nur erhitztes Wasser und kein Wasserdampf mehr abgeführt wird.

Fig. 3 zeigt einen Querschnitt durch das erfindungsgemäße Heizsystem 10 mit Motor 50. Das Heizsystem 10 besteht dabei aus der Heizeinheit 70, welche bereits in den Fig. 1 und 2 näher erläutert worden ist. Im Querschnitt durch die Heizeinheit 70 ist wiederum die Heizwasserleitung 72 zu erkennen, welche das erhitzte Wasser zurück zum Pumpendeckel 32 führt. Die flüssigkeitskommunizierende Verbindung zwischen Heizwasserabfuhr 76 und Brühwasserleitung 40 ist über O-Ringe abgedichtet. Anhand dieses Querschnittes soll die grundsätzliche Funktionsweise des Heizsystems 10 beschrieben werden. Über den Motor 50 und dessen Antriebswelle 42, welche über eine Wellendichtung 54 im Pumpenboden 34 des Pumpengehäuses 31 abgedichtet ist, wird das Laufrad 38 angetrieben. Über eine in Fig. 3 nicht dargestellte Pumpenwasserzufuhr 44 wird Wasser dem Laufrad 38 zugeführt. Durch die Rotation des Laufrades 38 wird das Wasser in Richtung der Pumpenwasserabfuhr 46 in die Heizwasserzufuhr 74 hineingefördert. In dieser durchläuft es den Wärmetauscher 78 und wird an dessen Ende durch die Heizwasserlastleitung 72 innerhalb der Heizeinheit 70 wieder zum Pumpengehäuse 31 zurückgeführt. Durch die Brühwasserleitung 40 und die ebenfalls in Fig. 3 nicht dargestellte Brühwasserabfuhr 42 kann das erhitzte Wasser entnommen werden. Bei kompakter Bauweise und einwandfreier Funktion sind somit kurze Wege und einfache Anschlussmöglichkeiten realisiert.

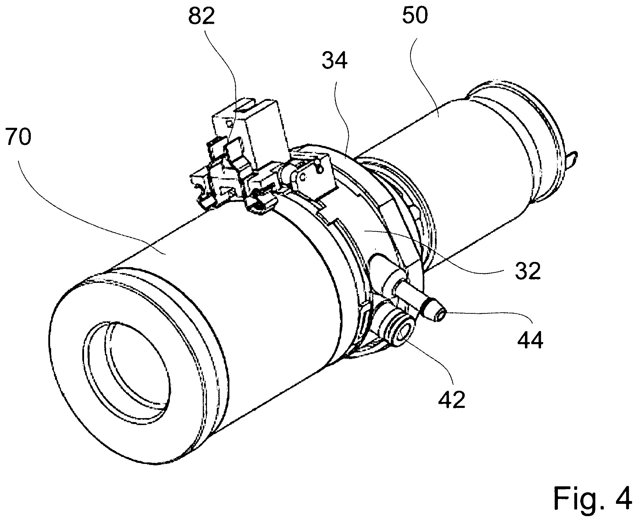

Fig. 4 zeigt eine Schrägansicht des Heizsystems 10 mit Motor 50 gemäß der Ausbildungsform aus Fig. 3. Die Heizeinheit 70 weist an der Außenseite als elektrische Schnittstelle eine elektrische Kontaktierung 82 auf, über welche die Funktionselemente der Heizfläche 80 des Wärmetauschers 78 elektrisch kontaktiert werden können. Ebenfalls deutlich zu sehen sind die beiden Wasseranschlüsse, nämlich die Pumpenwasserzufuhr 44 und die Brühwasserabfuhr 42. Wie zu erkennen ist, ist die Pumpenwasserzufuhr 44 deutlich einfacher ausgeführt, da auf dieser Seite keine Druckbeaufschlagung stattfindet. Die Brühwasserabfuhr 42 hingegen ist sowohl thermisch als auch gegen Druck gesichert und damit deutlich stabiler ausgeführt. Die äußeren Konturen der Heizeinheit 70 sowie des Pumpendeckels 32 und des Pumpenbodens 34 gehen im Wesentlichen ohne Stufe ineinander über. Der Motor 50 ist ebenfalls rund, jedoch kleiner als die übrigen Elemente und damit gegenüber dem Heizsystem 10 zurückgesetzt.

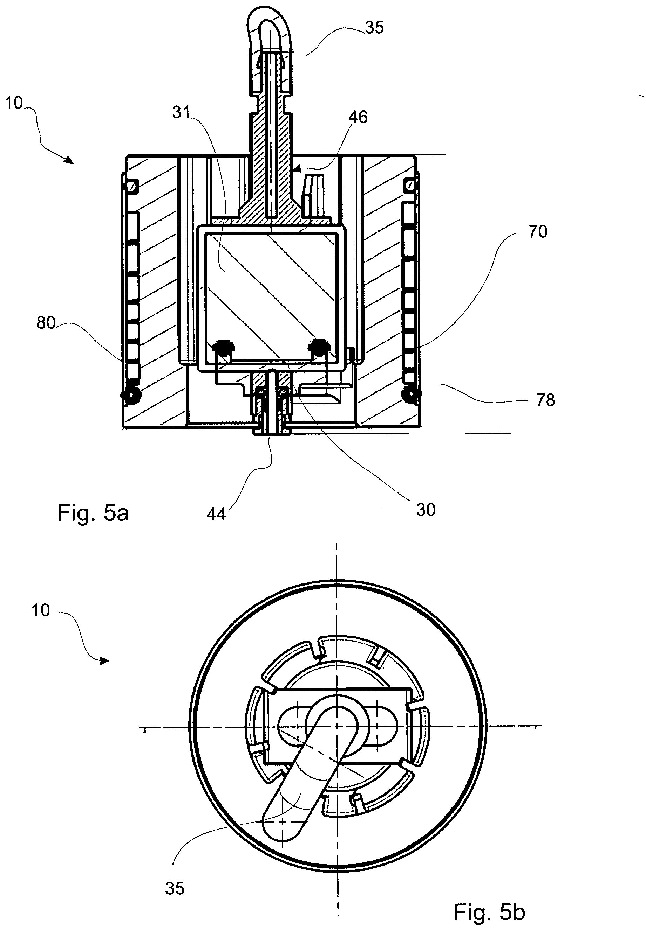

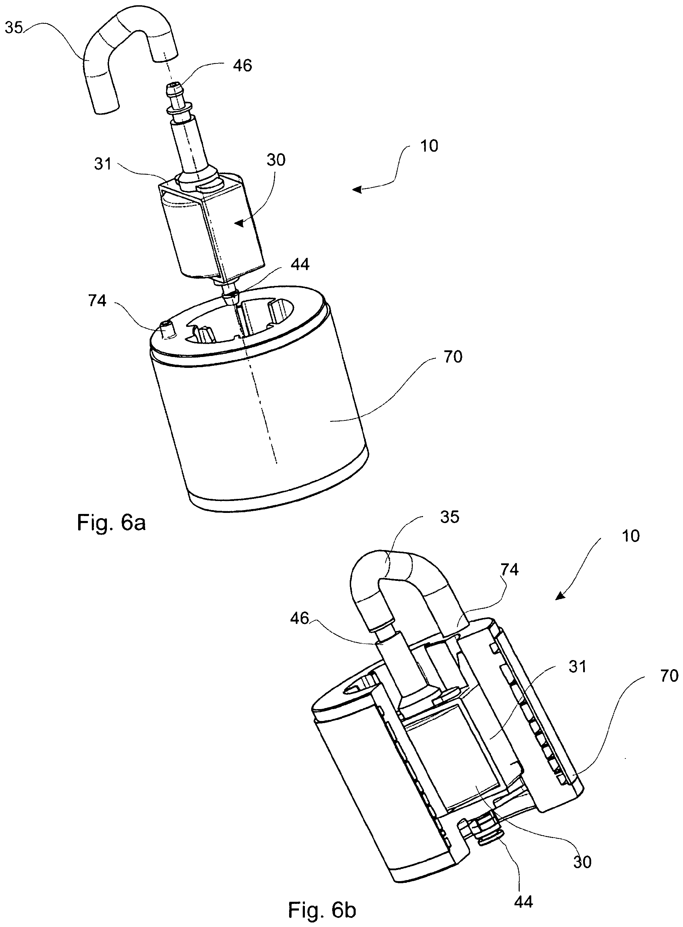

In den Fig. 5a, 5b, 6a und 6b ist ein zweites Ausführungsbeispiel eines erfindungsgemäßen Heizsystems 10 dargestellt. Fig. 5a zeigt einen Querschnitt durch das erfindungsgemäße Heizsystem 10. Als Pumpe 30 ist eine Schwingankerpumpe dargestellt. In diesem Querschnitt ist zu erkennen, dass die Pumpe 30 bei dieser Ausführungsform des Heizsystems 10 innerhalb der Heizeinheit 70 angeordnet ist. Die Heizeinheit 70 weist hierzu eine im Wesentlichen rohrförmige Ausgestaltungsform auf, wobei der Innendurchmesser des Rohres der Heizeinheit 70 groß genug ist, um die Pumpe 30 aufzunehmen. Das Pumpengehäuse 31 der Pumpe 30 greift dabei von innen in das Material der Heizeinheit 70 ein, sodass ein Kontakt zwischen Pumpengehäuse 31 und Heizeinheit 70 dahin gehend besteht, dass die Pumpe 30 fest mit der Heizeinheit 70 verbunden wird. Diese Verbindung ist durch einfaches Einstecken der Pumpe 30 in die rohrförmige Heizeinheit 70 erfolgt und mit einem gewissen Kraftaufwand auch wieder lösbar, sodass für die Montage keine zusätzlichen Elemente oder Werkzeuge notwendig sind und auch ein Demontieren in einfacher Weise gewährleistet ist.

Wie oben angemerkt, ist die Pumpe 30 gemäß der Ausführungsform in Fig. 5a als Schwingankerpumpe ausgestaltet. Sie hat am unteren Ende eine Pumpenwasserzufuhr 44 und am oberen Ende eine Pumpenwasserabfuhr 46. Die Pumpenwasserabfuhr 46 steht in Kommunikation mit einem Fluidmodul 35, welches wiederum in Kontakt mit einer Heizwasserzufuhr 74 der Heizeinheit 70 steht. Der Kontakt zwischen Pumpengehäuse 31 und Heizeinheit 70 ist in einer Art und Weise ausgeführt, dass eine hohe Wärmeübertragungsfähigkeit über diesen Kontakt möglich ist. So sind die Materialien für das Pumpengehäuse 31 und die Heizeinheit 70 derart gewählt, dass sie einen geringen Wärmewiderstand und auch einen geringen Wärmekontaktwiderstand an den Kontaktflächen aufweisen. Der dadurch erzielte Wärmeaustausch zwischen Pumpe 30 und Heizeinheit 70 dient zur besseren Nutzung der in der Heizeinheit 70 erzeugten Wärme. Die durch den Antrieb der Pumpe 30 erzeugte Abwärme kann als Zusatzwärme für die Heizeinheit 70 verwendet werden, während im Volllastbetrieb die von der Heizeinheit 70 erzeugte Wärme in der Pumpe 30 ein Vorwärmen des Heizwassers ermöglicht. Die Effizienz des gesamten Heizsystems wird damit deutlich erhöht.

Fig. 5b zeigt die Draufsicht des Heizsystems gemäß Fig. 5a. Deutlich zu erkennen ist ein Fluidmodul 35 in Minimalausführung, welches die Pumpenwasserabfuhr 46 mit der Heizwasserzufuhr 74 der Heizeinheit 70 verbindet.

Fig. 6a zeigt eine Explosionszeichnung eines Heizsystems 10 gemäß den Fig. 5a und 5b. Diese Zeichnung stellt prinzipiell auch den Zustand vor der Montage des Heizsystems 10 dar. Anhand von Fig. 6a soll der Montagevorgang selbst beschrieben werden. Die Heizeinheit 70, welche rohrförmig ausgestaltet ist, weist einen Innendurchmesser auf, welcher groß genug ist, um die Pumpe 30 aufzunehmen. Das Pumpengehäuse 31 weist Kontaktflächen auf, die beim Einsetzen in die Heizeinheit 70 mit dem Innendurchmesser der Heizeinheit 70 in Kontakt treten und die Pumpe 30 in der Heizeinheit 70 fixieren. Nach diesem Montageschritt wird das Fluidmodul 35 zur Herstellung der flüssigkeitskommunizierenden Verbindung zwischen Pumpenwasserabfuhr 46 und Heizwasserzufuhr 74 angebracht.

Fig. 6b zeigt einen Teilschnitt durch das Heizsystem 10 der Fig. 5a bis 6a nach der Montage. Deutlich zu erkennen ist die Pumpe 30, welche sich über ihr Gehäuse 31 in der rohrförmigen Heizeinheit 70 fixiert.

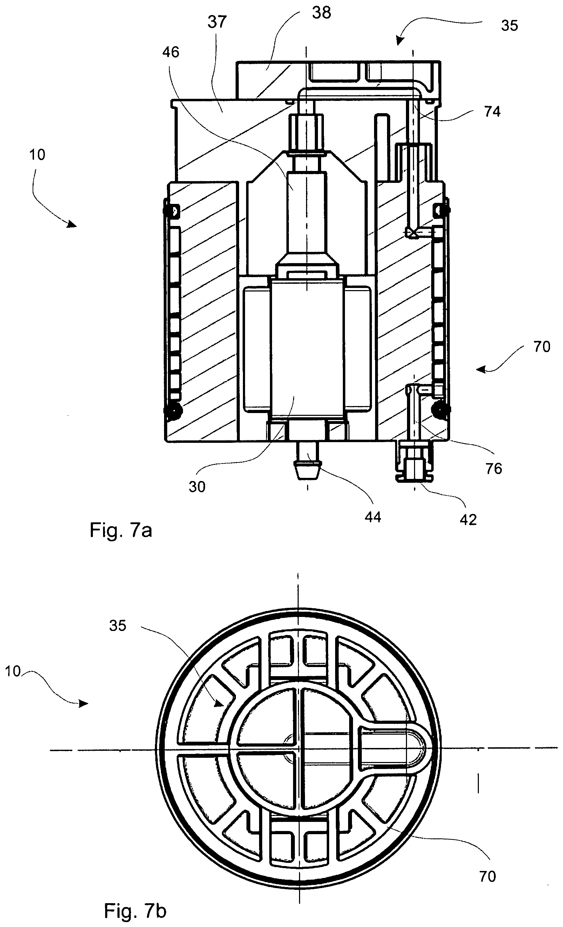

Die Fig. 7a bis 8 zeigen eine vorteilhafte Weiterbildung des zweiten Ausführungsbeispiels des erfindungsgemäßen Heizsystems 10. Fig. 7a zeigt den Querschnitt durch das Heizsystem 10. Auch bei dieser Ausführungsform handelt es sich bei der Pumpe 30 um eine Schwingankerpumpe, die im Inneren der im Wesentlichen rohrförmigen Heizeinheit 70 angeordnet ist. Die Pumpe 30 weist an ihrer Unterseite eine Pumpenwasserzufuhr 44 und an ihrer Oberseite eine Pumpenwasserabfuhr 46 auf. Ein zweiteiliges Fluidmodul 35, gebildet aus einem Hauptmodul 39 und einem Zwischenmodul 37, zur Herstellung einer flüssigkeitskommunizierenden Verbindung zwischen Pumpenwasserabfuhr 46 und Heizwasserzufuhr 74 ist sehr kompakt als Abschluss des Heizsystems an dessen einem, in der Fig. 7a oberen, Ende ausgestaltet. Im Inneren des Fluidmoduls 35 befindet sich ein Fluidkanal, der die flüssigkeitskommunizierende Verbindung zwischen Pumpenwasserabfuhr 46 und Heizwasserzufuhr 74 herstellt. Der Kanal gemäß der Ausführungsform in Fig. 7a im Hauptmodul 39 des Fluidmoduls 35 ist in besonders einfacher Weise ausgestaltet, da es sich im Wesentlichen nur um eine Nut im Hauptmodul des Fluidmoduls 35 handelt, da die weitere Wandung des Fluidkanals durch Teile der Heizeinheit 70 selbst gebildet werden. Eine Abdichtung muss somit nur um dieses Kanalsystem herum, gegen das Zwischenmodul 37 erfolgen. Am rechten unteren Ende, also der Heizeinheit 70 nachgeordnet, befindet sich die Heizwasserabfuhr 76 sowie die Brühwasserabfuhr 42.

Die Teilung des Fluidmoduls 35 in Hauptmodul 39 und Zwischenmodul 37 hat unter anderem den Vorteil, dass einerseits eine größere Öffnung in der Heizeinheit 70 zum Einsetzen der Pumpe 30 vorgesehen werden kann, die dann einfach mit dem Zwischenmodul 37 verschlossen werden kann. Die Fluid kommunizierende Verbindung wird im Anschluss daran durch das Aufsetzen des Hauptmoduls 39 gebildet, welches das Fluidmodul 35 komplettiert. Angepasst an den Einsatzzweck sind die beiden einzelnen Module 37, 39 des Fluidmoduls 35 aus unterschiedlichen Materialien gefertigt. Das Zwischenmodul 37 kann beispielsweise aus einem Material bestehen, das die oben angesprochenen schalldämpfenden Eigenschaften aufweist, um die Pumpe 30 im Hinblick auf die Schallemission im Wesentlichen von der Heizeinheit 70 zu entkoppeln. Das Hauptmodul 39 ist materialtechnisch auf gute Wärmeisolation eingestellt, sodass die flüssigkeitskommunizierende Verbindung möglichst wenig Wärmeverlust des Gesamtsystems zulässt. Hierbei handelt es sich um die Wärme, welche das Fluid bereits aus der Pumpe 30 mitbringt, bevor es in die Heizeinheit 70 eintritt.

Zum Einsatz eines erfindungsgemäßen Heizsystems gemäß der Ausführungsform in Fig. 7a muss dieses Heizsystem 10 nur eingesetzt und die Pumpenwasserzufuhr 44 mit einem Frischwasseranschluss und die Brühwasserabfuhr 42 mit dem Brühwasserverbraucher verbunden werden. Nach dem weiteren Anschließen der elektrischen Anschlüsse für die Heizeinheit 70 sowie ggf. für weitere in das Heizsystem integrierte Funktionalitäten, wie z. B. ein im Fluidmodul integrierter Durchflussmesser, ist das Heizsystem 10 betriebsbereit. Besonders vorteilhaft können alle elektrischen Anschlüsse zur Spannungsversorgung und ggf. Sensorsignale in einer einzigen Systemschnittstelle, z. B. mittels eines gemeinsamen Systemanschlusses bzw. Systemsteckers zusammengefasst werden.

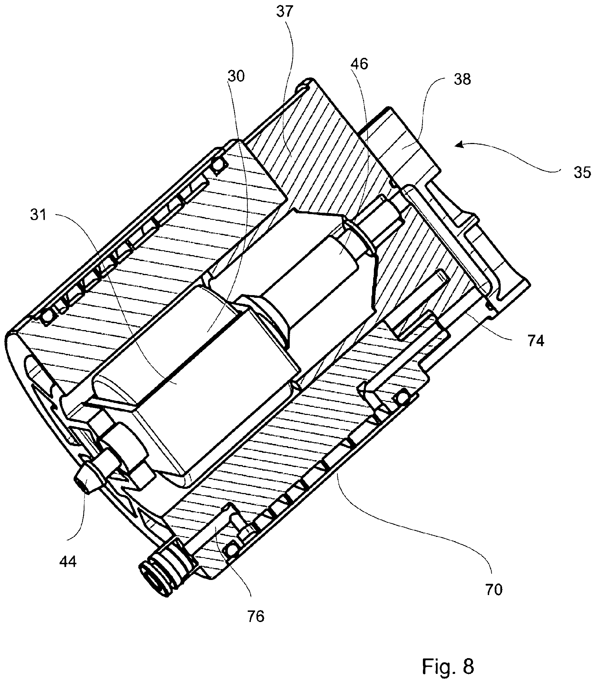

Fig. 7b zeigt eine Draufsicht eines Heizsystems 10 gemäß der Fig. 7a. Hier zeigt sich sowohl das Fluidmodul 35, als auch das obere Ende der Heizeinheit 70. Zusammen bilden Fluidmodul 35 und Heizeinheit 70 das obere Ende des Heizsystems 10. Das Heizsystem 10 gemäß den Fig. 7a und 7b ist in Fig. 8 in isometrischer Darstellung in einem Teilquerschnitt gezeigt. Dort findet sich die Pumpe 30 im Inneren der im Wesentlichen rohrförmigen Heizeinheit 70. Die Pumpe 30 ist wieder über ihr Pumpengehäuse 31 im Innendurchmesser der Heizeinheit 70 angeordnet und fixiert. Das Pumpengehäuse 31 bildet dabei insbesondere zwei große seitliche Kontaktflächen, wobei in Fig. 8 eine dieser beiden Kontaktflächen aus der Zeichnungsebene heraus zeigt. Diese Kontaktflächen bilden einerseits einen guten Wärmeübergang zwischen Pumpe 30 und Heizeinheit 70, andererseits dienen sie als Fixierung der Pumpe 30 im Inneren der Heizeinheit 70. Über die Größe der Kontaktflächen des Pumpengehäuses 31 kann beispielsweise ein Reibschluss zwischen dem Pumpengehäuse 31 und dem Innendurchmesser der Heizeinheit 70 erzeugt werden, wodurch sich zusätzliche weitere Herstellungsschritte bedingende Befestigungsmaßnahmen vermeiden lassen. Dieser Reibschluss erzeugt eine ausreichend feste Fixierung der Pumpe 30 im Inneren der Heizeinheit 70, wodurch diese ohne Werkzeug sowohl montierbar ist als auch demontierbar bleibt.

Nicht dargestellt sind in Fig. 8 die Schnapprastmittel, welche das Fluidmodul 35, in diesem Fall das Zwischenmodul 37, am rechten oberen Ende mit der Heizeinheit 70 verbinden und damit die Fluid kommunizierende Verbindung zwischen Pumpenwasserabfuhr 46 und Heizwasserzufuhr 74 bilden.

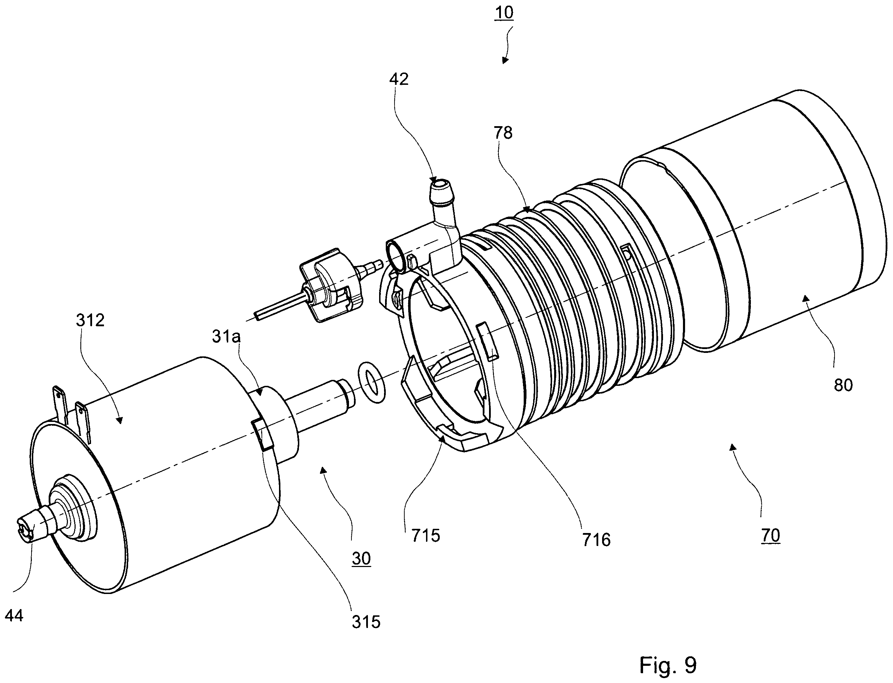

In Figur 9 ist ein erfindungsgemäßes Heizsystem 10 mit einer Schwingankerpumpe 30 als Pumpe, der Heizfläche 80 auf dem Mantelrohr der Heizeinheit 70, dem Wärmetauscher 78, der Brühwasserabfuhr 42, der Pumpenwasserzufuhr 44, dem Pumpengehäuse 31 sowie dem von Außen sichtbaren Teil des Jochs 312 der Magnetspule des Pumpenantriebs 50 dargestellt.

Aus Figur 9 geht ferner hervor, dass ein an dem Joch 312 angeordneter pumpenseitiger Verriegelungsteil 315 in Form einer Rastnase ausgeführt ist, die dafür ausgebildet ist, in einen reversiblen oder alternativ nicht reversiblen Eingriff mit einem heizeinheitseitigen Verriegelungsteil 715 gebracht zu werden. Auf diese Weise wird eine Bajonettverbindung zwischen der Pumpe 30 bzw. dem Pumpengehäuse 31 und der Heizeinheit 70 hergestellt, wobei bevorzugt mindestens zwei weitere jeweils korrespondierende Verriegelungsteile 315, 715 vorgesehen sind. Diese sind gleichmäßig auf den Umfang des Jochs 312 verteilt angeordnet. Durch diese Verbindung kann ein großer Teil der Pumpe 30, d.h. des Schwingankerpumpengehäuses 31a, innerhalb der Heizeinheit 70 im Sinne einer kompakten Integration des Heizsystems 10 angeordnet werden. Dabei ist wenigstens eine Einrichtung zur Sichtprüfung an der Heizeinheit 70, beispielsweise in Form mindestens einer Öffnung 716, vorgesehen, über welche von außen erkennbar ist, ob die Verbindung zwischen Pumpe 30 und Heizeinheit 70 ordnungsgemäß hergestellt ist.

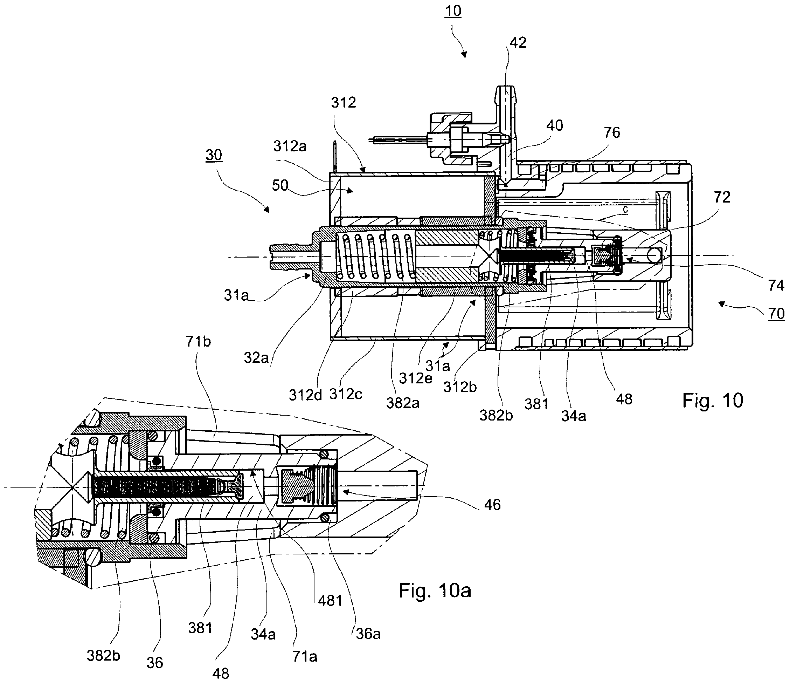

Anhand der Figur 10, in der ein erfindungsgemäßes Heizsystem 10 mit einer Schwingankerpumpe 30 in einer Schnittansicht dargestellt ist, wird die Funktionsweise der Schwingankerpumpe 30 im Folgenden kurz erläutert.

Die vom Joch 312, das bevorzugt aus Weicheisen oder einem gesinterten Ferrit zur Magnetfeldleitung gefertigt ist, ummantelte (Magent-)Spule 50 erzeugt durch Speisung mit elektrischen Strom ein Magnetfeld, das auf den Kolben 381, insbesondere auf den Magnetteil 381a des Kolbens 381 wirkt und den Kolben 381 in axiale Bewegung versetzt. Das Joch 312 ist mehrteilig ausgeführt und besteht insbesondere aus einem ersten stirnseitigen Jochteil 312a, einem zweiten stirnseitigen Jochteil 312b, einem mantelseitigen Jochteil 312c, einem ersten inneren Jochteil 312d sowie einem zweiten inneren Jochteil 312e. Das Joch 312 kann auch ummantelt sein, beispielsweise von einem Kunststoffgehäuse.

Durch Federn 382a, 382b wirkt der unter Einfluss des Magnetfeldes erzeugten Bewegung des Kolbens 381 je nach dem Ausmaß der Bewegung eine mehr oder minder große Kraft entgegen, hervorgerufen durch lineare, de- oder progressive Eigenschaften der Federn 382a, 382b, so dass in Abhängigkeit der Magnetfeldverteilung bzw. der Art des Magnetfeldes eine Pumpbewegung des Kolbens 381 einstellbar ist.

Das eigentliche Pumpen des zu fördernden Fluids selbst erfolgt im Wesentlichen in dem Pumpenraum 48, welcher als Kompressionskammer fungiert, da in dem Pumpenraum 48 das Fluid, welches durch den Kolben 381, insbesondere einen Durchlass in dem Kolben, in den Pumpenraum 48 gelangt, insbesondere bei einer Bewegung des Kolbens 381 aus dem Pumpenraum 48 heraus, und der darauffolgenden Bewegung des Kolbens 381 in den Pumpenraum 48 hinein komprimiert und in Richtung der Heizwasserleitung 72 gedrückt bzw. gefördert wird. Für weitere Details im Rahmen der Funktionsweise von Schwingankerpumpen sei an dieser Stelle auch auf die Offenlegungsschrift DE 10 2005 048 765 A1 hingewiesen.

In dem in Figur 10 dargestellten Ausführungsbeispiel ist ferner ersichtlich, dass der Kolben 381 bevorzugt so ausgeführt ist, um Druck in der Kompressionskammer 48 periodischen aufzubauen. Eine Abdichtung zwischen den Druck beaufschlagten fluidführenden Teilen der Schwingankerpumpe sowie einem nicht-fluidführenden Bereich der Heizeinheit ist auf einfache Weise möglich, insbesondere im Wesentlichen über eine Pumpendichtung 36 und eine Anschlussdichtung 36a, möglich. Durch die erfindungsgemäße Anordnung kann ein Großteil der üblicherweise erforderlichen Dichtungen und Schläuche bzw. Fluidführungs-Komponenten entfallen.

Aus Figur 10a ist ferner ersichtlich, dass das Verdrängungselement der Pumpe als Kolben 381ausgeführt ist, der sowohl in den vom Schwingankerpumpenboden 34a gebildeten Bereich als auch in den vom Zylinder 481 gebildeten Pumpenraum 48 hineinragend angeordnet ist. Ferner wird deutlich, dass an der Heizeinheit 70 ausgebildete Vorsprünge bzw. Rippen 71a, 71b vorgesehen sind, die auch eine Funktion zum Ausrichten der Lage der Schwingankerpumpe 30 in der Heizeinheit 70 übernehmen.

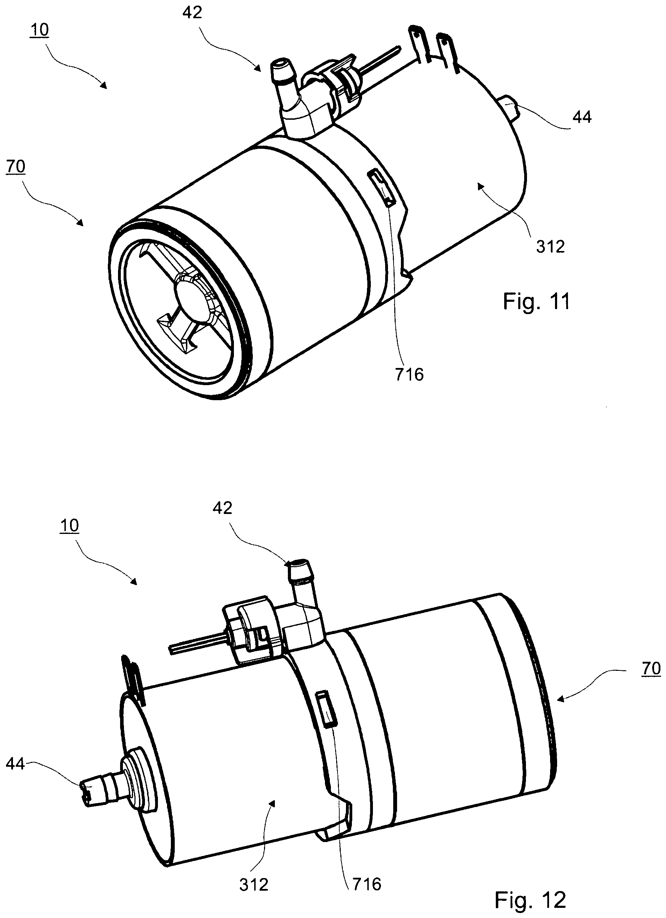

Figur 11 und Figur 12 zeigen ein erfindungsgemäßes Heizsystem 10 mit der Heizeinheit 70, der Brühwasserabfuhr 42, der Pumpenwasserzufuhr 44, dem Pumpengehäuse 31 sowie dem Joch 312, wobei die Kompaktheit des Heizsystems ersichtlich ist. Ferner ist die Öffnung 716 gezeigt, welche für eine Sichtprüfung der Verbindung zwischen der Schwingankerpumpe 30 bzw. dem Schwingankerpumpengehäuse 31 a und Heizeinheit 70 vorgesehen sein kann.

Die voranstehend näher erläuternden Ausführungsbeispiele gemäß den Fig. 1 bis 12 weisen zwar jeweils unterschiedliche Ausgestaltungsformen und unterschiedliche Detaillösungen auf, jedoch sind sämtliche Ausgestaltungsformen und Detaillösungen auch alternativ oder in Kombination mit den dargestellten, aber auch mit nicht dargestellten und beschriebenen Ausführungsformen im Rahmen der vorliegenden Erfindung denkbar.

Zusammenfassend wurde hier ein Heizsystem offenbart, insbesondere für Haushaltsgeräte zur Zubereitung von Heißgetränken bzw. gebrühten Nahrungsmitteln, das mindestens ein derartiges Heizsystem aufweist, wobei das Heizsystem wenigstens eine Heizeinheit und wenigstens eine antreibbare Pumpe mit einem Pumpengehäuse aus mindestens zwei Teilen aufweist. Das Pumpengehäuse besitzt mindestens eine Pumpenwasserzufuhr und eine Pumpenwasserabfuhr und die Heizeinheit in Form eines Durchlauferhitzers mit mindestens einer Heizwasserzufuhr und einer Heizwasserabfuhr bilden ein kompaktes, insbesondere hochdruckfähiges Heizsystem, indem ein Teil des Pumpengehäuses gleichzeitig ein Verbindungsteil zum Verbinden der Heizeinheit mit der Pumpe bildet und die Pumpenwasserabfuhr und die Heizwasserzufuhr in flüssigkeitskommunizierender Verbindung vorgesehen sind.

### Bezugszeichenliste

- 10: Heizsystem
- 30: Pumpe
- 31: Pumpengehäuse
- 31a: Schwingankerpumpengehäuse
- 312: Joch
- 312a: erstes stirnseitiges Jochteil
- 312b: zweites stirnseitiges Jochteil
- 312c: mantelseitiges Jochteil
- 312d: erstes inneres Jochteil
- 312e: zweites inneres Jochteil
- 315: pumpenseitiger Verbindungsteil
- 32: Pumpendeckel
- 32a: Schwingankerpumpendeckel zur Ankeraufnahme
- 34: Pumpenboden
- 34a: Schwingankerpumpenboden
- 35: Fluidmodul
- 36: Pumpendichtung
- 36a: Anschlussdichtung
- 37: Zwischenmodul
- 38: Laufrad
- 381: Kolben
- 381a: Magnetteil
- 382a: Feder
- 382b: Feder
- 39: Hauptmodul
- 40: Brühwasserleitung
- 42: Brühwasserabfuhr
- 44: Pumpenwasserzufuhr
- 46: Pumpenwasserabfuhr
- 48: Pumpenraum bzw. Kompressionskammer
- 481: Zylinder
- 50: Antrieb, z. B. Motor bzw. Spule
- 52: Antriebswelle
- 54: Wellendichtung56 Verbindungselement
- 70: Heizeinheit
- 71a: Rippe
- 71b: Rippe
- 715: heizeinheitseitiger Verbindungsteil
- 716: Öffnung
- 72: Heizwasserleitung
- 74: Heizwasserzufuhr
- 76: Heizwasserabfuhr
- 78: Wärmetauscher
- 80: Heizfläche
- 82: elektrische Kontaktierung

## Patentansprüche

1. Heizsystem (10) mit wenigstens einer Heizeinheit (70) und wenigstens einer antreibbaren Pumpe (30) mit einem Pumpengehäuse (31; 31a) aus mindestens zwei Teilen,
wobei das Pumpengehäuse (31; 31a) mindestens eine Pumpenwasserzufuhr (44) und eine Pumpenwasserabfuhr (46) aufweist, und wobei das Pumpengehäuse (31; 31a) aus einem Pumpenboden (34; 34a) und einem Pumpendeckel (32; 32a) besteht,
wobei die Heizeinheit (70) ein Durchlauferhitzer mit mindestens einer Heizwasserzufuhr (74) und einer Heizwasserabfuhr (76) ist, und
**dadurch gekennzeichnet, dass**
ein Teil des Pumpengehäuses (31; 31a) gleichzeitig ein Verbindungsteil zum Fixieren der Heizeinheit (70) an der Pumpe (30) bildet und die Pumpenwasserabfuhr (46) und die Heizwasserzufuhr (74) in flüssigkeitskommunizierender Verbindung stehen.

2. Heizsystem (10) nach Anspruch 1,
**dadurch gekennzeichnet, dass** die flüssigkeitskommunizierende Verbindung zwischen Pumpenwasserabfuhr (46) und Heizwasserzufuhr (74) in einem Fluidmodul (35) vorgesehen ist, welches einen Fluidkanal zur flüssigkeitskommunizierenden Verbindung zwischen Pumpenwasserabfuhr (46) und Heizwasserzufuhr (74) aufweist, und welches zumindest ein Ende des Heizsystems (10), insbesondere hermetisch, abschließt, und wobei in das Fluidmodul (35) bevorzugt ein Durchflussmesser (Flowmeter) integriert ist.

3. Heizsystem (10) nach Anspruch 1 oder 2,
**dadurch gekennzeichnet, dass** die Pumpenwasserabfuhr (46) in direkter, abgedichteter flüssigkeitskommunizierender Verbindung mit der Heizwasserzufuhr (74) steht.

4. Heizsystem (10) nach einem der vorhergehenden Ansprüche,
**dadurch gekennzeichnet, dass** die Pumpe (30) eine Vibrationspumpe, insbesondere eine Schwingankerpumpe, ist.

5. Heizsystem (10) nach einem der vorhergehenden Ansprüche,
**dadurch gekennzeichnet, dass** die Teile des Pumpengehäuses (31; 31a) miteinander und/oder das Verbindungsteil mit der Heizeinheit (70) formschlüssig verriegelbar, insbesondere durch einen Bajonettverschluss oder einen Schraubverschluss oder eine Schnapp-Rast-Verbindung, verbindbar sind, wobei die formschlüssige Verbindung bevorzugt so ausgestaltet ist, dass sie nicht zerstörungsfrei getrennt werden kann.

6. Heizsystem (10) nach einem der vorhergehenden Ansprüche,
**dadurch gekennzeichnet, dass** das Pumpengehäuse (31; 31a) zusätzlich eine Brühwasserleitung (40) und eine Brühwasserabfuhr (42) aufweist, wobei die Brühwasserleitung (40) in flüssigkeitskommunizierender Verbindung mit der Heizwasserabfuhr (76) steht, und wobei die Brühwasserabfuhr (42) und die Pumpenwasserzufuhr (44) im selben Teil des Pumpengehäuses (31; 31a), insbesondere im Verbindungsteil angeordnet sind, und wobei in die Brühwasserabfuhr (42) bevorzugt ein Sperrventil integriert ist.

7. Heizsystem (10) nach einem der vorhergehenden Ansprüche,
**dadurch gekennzeichnet, dass** die Pumpe gleichzeitig als Durchflussmesser geeignet ist, insbesondere derart, dass die Durchflussrate durch die Heizeinheit (70) durch die der Pumpe zugeführte Antriebsleistung abgebildet werden kann.

8. Heizsystem (10) nach Anspruch 6 oder Anspruch 7 soweit rückbezogen auf Anspruch 6,
**dadurch gekennzeichnet, dass** in der Brühwasserleitung (40) oder an der Brühwasserabfuhr (42) ein Drainagenventil und/oder ein Zweiwegeventil zur wahlweisen Umschaltung der Brühwasserleitung zu unterschiedlichen Ausgabepunkten vorgesehen ist.

9. Heizsystem (10) nach Anspruch 7 oder 8,
**dadurch gekennzeichnet, dass** in der Brühwasserleitung (40) bevorzugt ein Rückführungsventil integriert ist, mittels dem sich Heißwasser aus der Brühwasserleitung (40) über eine ebenfalls in das Heizsystem (10) integrierte Rückführungsleitung zur Pumpenwasserzufuhr (44), bevorzugt in einen die Pumpenwasserzufuhr speisenden Frischwasserbehälter zurückführen lässt, wobei bevorzugt im hydraulischen Strang des Heizsystems (10) ein Überdruckventil integriert ist.

10. Heizsystem (10) nach einem der vorhergehenden Ansprüche,
**dadurch gekennzeichnet, dass** am Heizsystem (10), insbesondere am Pumpengehäuse (31; 31a) eine standardisierte Montageschnittstelle zum Befestigen des Heizsystems (10) in einer dafür vorgesehenen Maschine vorgesehen ist.

11. Heizsystem (10) nach einem der vorhergehenden Ansprüche,
**dadurch gekennzeichnet, dass** bevorzugt zusätzlich eine Universalelektronik vorgesehen ist, welche eingerichtet ist, die Pumpe (30) über eine Steuerverbindung zu steuern.

12. Heizsystem (10) nach einem der vorhergehenden Ansprüche,
**dadurch gekennzeichnet, dass** das mindestens eine Verdrängungselement (38; 381) bevorzugt als ein Kolben (381), insbesondere als Schwinganker, ausgeführt ist, welcher zum periodischen Aufbauen eines Pumpendrucks in einer Kompressionskammer (48) ausgebildet ist,
wobei der pumpenseitige Verbindungsteil (315) mit einem heizeinheitseitigen Verbindungsteil (715) in Eingriff gebracht wird, wobei bevorzugt mindestens eine Öffnung (716), insbesondere heizeinheitseitig, für eine Sichtprüfung vorgesehen ist, und
wobei eine Abdichtung im Wesentlichen über eine Pumpendichtung (36) sowie eine Anschlussdichtung (36a) erfolgt.

13. Schwingankerpumpe verwendet als antreibbare Pumpe (30) in einem Heizsystem (10) gemäß einem der vorhergehenden Ansprüche 1 bis 12, **dadurch gekennzeichnet, dass** die Pumpe (30) mit einem Pumpengehäuse (31; 31a) aus mindestens zwei Teilen ausgeführt ist,
wobei das Pumpengehäuse (31; 31a) mindestens eine Pumpenwasserzufuhr (44) und eine Pumpenwasserabfuhr (46) aufweist, und wobei das Pumpengehäuse (31; 31a) aus einem Pumpenboden (34; 34a) und einem Pumpendeckel (32; 32a) besteht, und
wobei ein Teil des Pumpengehäuses (31; 31a) gleichzeitig ein Verbindungsteil zum Fixieren der Heizeinheit (70) mit der Pumpe (30) bildet, sodass die Pumpenwasserabfuhr (46) und die Heizwasserzufuhr (74) in flüssigkeitskommunizierender Verbindung stehen.

14. Durchlauferhitzer verwendet als Heizeinheit (70) in einem Heizsystem (10) gemäß einem der vorhergehenden Ansprüche 1 bis 12,
**dadurch gekennzeichnet, dass** die Heizeinheit (70) ein Durchlauferhitzer mit mindestens einer Heizwasserzufuhr (74) und einer Heizwasserabfuhr (76) ist, und
wobei die Pumpenwasserabfuhr (46) und die Heizwasserzufuhr (74) in flüssigkeitskommunizierender Verbindung stehen.

15. Haushaltsgerät zur Zubereitung von Heißgetränken bzw. gebrühten Nahrungsmitteln aufweisend mindestens ein Heizsystem (10) mit den Merkmalen eines der Ansprüche 1 bis 12.

## Claims

1. A heating system (10) with at least one heating unit (70) and at least one drivable pump (30) with a pump housing (31; 31a) comprising at least two parts,
the pump housing (31; 31a) comprising at least one pump water inlet (44) and one pump water outlet (46), and the pump housing (31; 31a) consisting of a pump bottom (34; 34a) and a pump cover (32; 32a),
the heating unit (70) being an instantaneous water heater with at least one heating water inlet (74) and one heating water outlet (76), and
**characterized in that**
one part of the pump housing (31; 31a) simultaneously forms a connecting part for securing the heating unit (70) to the pump (30), and the pump water outlet (46) and the heating water inlet (74) are in fluid communication.

2. A heating system (10) according to claim 1,
**characterized in that** the fluid communication between pump water outlet (46) and heating water inlet (74) is provided in a fluid module (35), which comprises a fluid duct for fluid communication between pump water outlet (46) and heating water inlet (74), and which seals off at least one end of the heating system (10), in particular hermetically, a flow meter preferably being incorporated into the fluid module (35).

3. A heating system (10) according to claim 1 or claim 2,
**characterized in that** the pump water outlet (46) is in direct, sealed fluid communication with the heating water inlet (74).

4. A heating system (10) according to one of the preceding claims,
**characterized in that** the pump (30) is a vibration pump, in particular an oscillating pump.

5. A heating system (10) according to one of the preceding claims,
**characterized in that** the parts of the pump housing (31; 31a) may be connected together and/or the connecting part may be connected to the heating unit (70) in form-fittingly lockable manner in particular by a bayonet closure or a screw closure or a snap-fit/latching connection, the form-fitting connection preferably being configured such that it cannot be non-destructively separated.

6. A heating system (10) according to one of the preceding claims,
**characterized in that** the pump housing (31; 31a) additionally comprises a brewing water line (40) and a brewing water outlet (42), the brewing water line (40) being in fluid communication with the heating water outlet (76), and the brewing water outlet (42) and the pump water inlet (44) being arranged in the same part of the pump housing (31; 31a), in particular in the connecting part, and a stop valve preferably being incorporated into the brewing water outlet (42).

7. A heating system (10) according to one of the preceding claims,
**characterized in that** the pump is simultaneously suitable as a flow meter, in particular in such a way that the flow rate through the heating unit (70) may be determined on the basis of the drive power supplied to the pump.

8. A heating system (10) according to claim 6 or claim 7 insofar as they are subordinate to claim 6,
**characterized in that** in the brewing water line (40) or at the brewing water outlet (42) a drainage valve and/or a two-way valve is/are provided for optional switching of the brewing water line to different delivery points.

9. A heating system (10) according to claim 7 or claim 8,
**characterized in that** the brewing water line (40) preferably has a recirculation valve incorporated in it, by means of which hot water from the brewing water line (40) may be recirculated via a recirculation line likewise incorporated into the heating system (10) to the pump water inlet (44), preferably into a fresh water container feeding the pump water inlet, a pressure relief valve preferably being incorporated into the hydraulic branch of the heating system (10).

10. A heating system (10) according to one of the preceding claims,
**characterized in that** a standardised mounting interface for attaching the heating system (10) in a machine intended therefore is provided on the heating system (10), in particular on the pump housing (31; 31a).

11. A heating system (10) according to one of the preceding claims,
**characterized in that** a general-purpose electronic system is preferably additionally provided, which is configured to control the pump (30) via a control connection.

12. A heating system (10) according to one of the preceding claims, **characterized in that** the at least one displacement element (38; 381) is preferably embodied as a piston (381), in particular as an oscillating armature, which is configured periodically to build up a pump pressure in a compression chamber (48),
the connecting part (315) on the pump being brought into engagement with a connecting part (715) on the heating unit, at least one opening (716) preferably being provided, in particular on the heating unit, for visual inspection and
sealing proceeding substantially via a pump seal (36) and a connection seal (36a).

13. An oscillating pump used as a drivable pump (30) in a heating system (10) according to one of preceding claims 1 to 12,
**characterized in that** the pump (30) is embodied with a pump housing (31; 31a) comprising at least two parts,
the pump housing (31; 31a) comprising at least one pump water inlet (44) and one pump water outlet (46), the pump housing (31; 31a) consisting of a pump bottom (34; 34a) and a pump cover (32; 32a), and
one part of the pump housing (31; 31a) simultaneously forming a connecting part for securing the heating unit (70) to the pump (30), such that the pump water outlet (46) and the heating water inlet (74) are in fluid communication.

14. An instantaneous water heater used as a heating unit (70) in a heating system (10) according to one of preceding claims 1 to 12,
**characterized in that** the heating unit (70) is an instantaneous water heater with at least one heating water inlet (74) and one heating water outlet (76), and
the pump water outlet (46) and the heating water inlet (74) being in fluid communication.

15. A domestic appliance for preparing hot beverages or brewed foodstuffs comprising at least one heating system (10) having the features of one of claims 1 to 12.

## Revendications

1. Système de chauffage (10) comprenant au moins une unité de chauffage (70) et au moins une pompe (30) entraînable, munie d'un corps de pompe (31; 31a) constitué d'au moins deux parties,
le corps de pompe (31; 31a) présentant au moins une arrivée d'eau de pompe (44) et une sortie d'eau de pompe (46), et le corps de pompe (31; 31a) étant constitué d'un fond de pompe (34; 34a) et d'un couvercle de pompe (32; 32a),
l'unité de chauffage (70) étant un chauffe-eau instantané comprenant au moins une arrivée d'eau chaude (74) et une sortie d'eau chaude (76), et
**caractérisé en ce qu'**
une partie du corps de pompe (31; 31a) forme simultanément une pièce de raccordement pour la fixation de l'unité de chauffage (70) sur la pompe (30) et **en ce que** la sortie d'eau de pompe (46) et l'arrivée d'eau chaude (74) communiquent par liaison fluidique.

2. Système de chauffage (10) selon la revendication 1,
**caractérisé en ce que** la liaison fluidique entre la sortie d'eau de pompe (46) et l'arrivée d'eau chaude (74) est ménagée dans un module de fluide (35), lequel présente un canal de fluide pour la communication par liaison fluidique entre la sortie d'eau de pompe (46) et l'arrivée d'eau chaude (74) et lequel ferme au moins une extrémité du système de chauffage (10), notamment de manière hermétique, et un débitmètre (flow meter) étant de préférence intégré dans le module de fluide (35).

3. Système de chauffage (10) selon la revendication 1 ou 2,
**caractérisé en ce que** la sortie d'eau de pompe (46) est en liaison fluidique étanchéifiée directe avec l'arrivée d'eau chaude (74).

4. Système de chauffage (10) selon l'une quelconque des revendications précédentes,
**caractérisé en ce que** la pompe (30) est une pompe à vibration, notamment une pompe à armature oscillante.

5. Système de chauffage (10) selon l'une quelconque des revendications précédentes,
**caractérisé en ce que** les parties du corps de pompe (31; 31a) peuvent être raccordées entre elles et/ou **en ce que** la pièce de raccordement est verrouillable par adhérence de forme avec l'unité de chauffage (70), notamment par une fermeture à baïonnette ou par un raccord à vis ou par une liaison à encliquetage, la liaison par adhérence de forme étant de préférence conçue de manière à ce qu'elle ne puisse pas être séparée de manière non destructive.

6. Système de chauffage (10) selon l'une quelconque des revendications précédentes,
**caractérisé en ce que** le corps de pompe (31; 31a) présente en outre une conduite d'eau bouillante (40) et une sortie d'eau bouillante (42), la conduite d'eau bouillante (40) étant en liaison fluidique avec la sortie d'eau chaude (76), et la sortie d'eau bouillante (42) et l'arrivée d'eau de pompe (44) étant disposées dans la même partie du corps de pompe (31; 31a), notamment dans la pièce de raccordement, et une vanne d'arrêt étant de préférence intégrée dans la sortie d'eau bouillante (42).

7. Système de chauffage (10) selon l'une quelconque des revendications précédentes,
**caractérisé en ce que** la pompe convient simultanément comme débitmètre, notamment de manière à ce que le débit puisse être représenté par l'unité de chauffage (70) par la puissance d'entraînement amenée à la pompe.

8. Système de chauffage (10) selon la revendication 6 ou la revendication 7 dans la mesure où elle fait renvoi à la revendication 6,
**caractérisé en ce qu'**une vanne de drainage et/ou une soupape à deux voies pour la commutation sélective de la conduite d'eau bouillante à différents points de décharge sont ménagées dans la conduite d'eau bouillante (40) ou sur la sortie d'eau bouillante (42).

9. Système de chauffage (10) selon la revendication 7 ou 8,
**caractérisé en ce qu'**une vanne de recirculation est de préférence intégrée dans la conduite d'eau bouillante (40), au moyen de laquelle l'eau chaude provenant de la conduite d'eau bouillante (40) peut être ramenée de préférence dans un réservoir d'eau fraîche alimentant l'arrivée d'eau de pompe, par l'intermédiaire d'une conduite de recirculation menant vers l'arrivée d'eau de pompe (44), également intégrée dans le système de chauffage (10), une soupape de sûreté étant intégrée de préférence dans la ligne hydraulique du système de chauffage (10).

10. Système de chauffage (10) selon l'une quelconque des revendications précédentes,
**caractérisé en ce qu'**une interface de montage standardisée, destinée à la fixation du système de chauffage (10) dans une machine prévue à cet effet, est ménagée sur le système de chauffage (10), notamment sur le corps de pompe (31; 31a).

11. Système de chauffage (10) selon l'une quelconque des revendications précédentes,
**caractérisé en ce qu'**une électronique universelle est de préférence ménagée en plus, laquelle est configurée pour commander la pompe (30) par l'intermédiaire d'une liaison de commande.

12. Système de chauffage (10) selon l'une quelconque des revendications précédentes,
**caractérisé en ce que** l'au moins un élément de déplacement (38; 381) est de préférence réalisé en tant qu'un piston (381), notamment en tant qu'armature oscillante, lequel est réalisé pour la formation périodique d'une pression de pompe dans une chambre de compression (48),
la pièce de raccordement (315) côté pompe étant mise en prise avec une pièce de raccordement (715) côté unité de chauffage, de préférence au moins une ouverture (716), notamment côté unité de chauffage, étant ménagée pour une inspection visuelle, et
une étanchéification étant essentiellement réalisée par l'intermédiaire d'un joint de pompe (36) ainsi que d'un joint de raccordement (36a).

13. Pompe à armature oscillante, utilisée comme pompe (30) entraînable dans un système de chauffage (10) selon l'une quelconque des revendications 1 à 12,
**caractérisée en ce que** la pompe (30) est réalisée avec un corps de pompe (31; 31a) constitué d'au moins deux parties,
le corps de pompe (31; 31a) présentant au moins une arrivée d'eau de pompe (44) et une sortie d'eau de pompe (46), et le corps de pompe (31; 31a) étant constitué d'un fond de pompe (34; 34a) et d'un couvercle de pompe (32; 32a), et
une partie du corps de pompe (31; 31a) formant simultanément une pièce de raccordement pour la fixation de l'unité de chauffage (70) avec la pompe (30) et **en ce que** la sortie d'eau de pompe (46) et l'arrivée d'eau chaude (74) communiquent par liaison fluidique.

14. Chauffe-eau instantané, utilisé comme unité de chauffage (70) dans un système de chauffage (10) selon l'une quelconque des revendications précédentes 1 à 12,
**caractérisé en ce que** l'unité de chauffage (70) est un chauffe-eau instantané comprenant au moins une arrivée d'eau chaude (74) et une sortie d'eau chaude (76), et
la sortie d'eau de pompe (46) et l'arrivée d'eau chaude (74) communiquant par liaison fluidique.

15. Appareil ménager destiné à la préparation de boissons chaudes ou d'aliments ébouillantés, présentant au moins un système de chauffage (10) ayant les caractéristiques de l'une quelconque des revendications 1 à 12.
